# EUROPÄISCHE PATENTSCHRIFT

(11) **EP 3 834 906 B1**
(45) Veröffentlichungstag und Bekanntmachung des Hinweises auf die Patenterteilung: **18.10.2023**
(21) Anmeldenummer: 20000457.0
(22) Anmeldetag: 12.12.2020
(51) Int. Cl.: B01D 45/08, B01D 45/12, B01D 46/00, B01D 46/10, B01D 46/12

(54) **VORRICHTUNG UND VERFAHREN ZUR ABTRENNUNG VON SCHWEBSTOFFEN AUS GASSTRÖMEN**
DEVICE AND METHOD FOR SEPARATING SUSPENDED MATTER FROM GAS STREAMS
DISPOSITIF ET PROCÉDÉ DE SÉPARATION DE MATIÈRES EN SUSPENSION À PARTIR DES ÉCOULEMENTS DE GAZ

(30) Priorität: 13.12.2019 DE 102019008646
(43) Veröffentlichungstag der Anmeldung: 16.06.2021
(73) Patentinhaber: Wenker GmbH & Co. Kg, 48683 Ahaus (DE)
(72) Erfinder: Leers, Matthias, 48683 Ahaus (DE); Luthe, Gregor, 48599 Gronau (Westf.) (DE); ten Thije, Niels, 7545 Enschede (NL); Schäfers, Silke, 48485 Neuenkirchen (DE)
(74) Vertreter: Schatz, Markus Franz-Josef

(56) Entgegenhaltungen:
- WO-A1-2013/182822
- CN-U- 207 169 608
- DE-A1-102004 038 243
- GB-A- 2 510 501
- JP-A- 2019 020 372

## Beschreibung

Die vorliegende Erfindung betrifft eine Vorrichtung zur Abtrennung von Schwebstoffen aus Gasströmen mit strömenden Gasen.

Außerdem betrifft die vorliegende Erfindung ein Verfahren zur Abtrennung von Schwebstoffen aus Gasströmen mit strömenden Gasen.

Des Weiteren betrifft die vorliegende Erfindung die Verwendung zur Abtrennung von Spritznebeln aus Spritzlackierkabinen mit strömenden Gasen.

### Stand der Technik

Vorrichtungen und Verfahren zur Abtrennung von Spritznebeln aus Spritzlackierkabinen sind aus den deutschen Patenten DE 10 2016 008 255 und DE 10 2017 002 312 und der Patentanmeldung 10 2017 007 312 bekannt. Die bekannten Verfahren und Vorrichtungen sind vor allem für die Abtrennung von Spritznebeln von Lacken auf Wasserbasis hervorragend geeignet. Die als Griesel oder Graupel abgeschieden Spritznebel könne nach dem Auftauen wieder als Spritzlacke verwendet werden.

Es wäre indes wünschenswert, ein ähnlich effektives und vorteilhaftes Verfahren zur Abtrennung von nichtwässrigen Spritznebeln aus nichtwässrigen Spritzlacken zu finden, das ohne aufwändige Filteranlagen betrieben werden kann.

Aus der deutschen Offenlegungsschrift 1 407 992 und dem deutschen Patent 1 092 281 sind eine Vorrichtung und ein Verfahren zur Wirbelabscheidung für Feststoff- oder Flüssigkeitsaerosole mit einem zur Drallerzeugung dienenden Hilfsgasstrom bekannt. Der Hilfsgasstrom wird durch einen seitlichen Einlass unter einem spitzen Winkel zur Querschnittsebene einer Wirbelkammer nach unten einem aufsteigenden Aerosolstrom entgegen geblasen.

Aus der deutschen Offenlegungsschrift 27 54 528 ist ein Kollektor von Aerosolteilchen bekannt, der eine Düse zum Ansaugen und Beschleunigen der Aerosole und eine Auffangvorrichtung für Aerosolteilchen gegenüber der Austrittsöffnung der Düse umfasst. Die Auffangvorrichtung wird von einem Hohlraum mit gestauter Luft gebildet, der in seinem oberen Teil eine Öffnung gegenüber dem Düsenausgang besitzt und der so ausgeführt ist, dass die durch die Hohlraumöffnung eintreffenden Aerosolteilchen durch die gestaute Luft abgebremst werden und auf die Bodenfläche des Hohlraums verteilt sedimentieren.

Aus der chinesischen Patentanmeldung CN 105289190 A ist eine Vorrichtung zur Beseitigung von Aerosolen bekannt, die ein Venturirohr und einen Zyklonabscheider umfasst. Dabei ist der Eingang des Zyklonabscheiders mit dem Venturirohr verbunden, und der Eingang für das Aerosol ist im Diffusionsbereich des Venturirohrs angeordnet. In dem Zyklonabscheider werden die Aerosolteilchen von der Luft getrennt.

Aus der chinesischen Patentanmeldung CN 110064552 A ist eine Lackierkabine für Spritzlacke auf Wasserbasis bekannt, bei der der Lackierbereich von einem nach unten strömenden Luftvorhang umgeben ist, der den Overspray auffängt und wegtransportiert. Dieses Verfahren ist jedoch auf die Anwendung in Lackierkabinen beschränkt.

Aus dem amerikanischen Patent US 7,975,564 B2 sind ein Verfahren und eine Vorrichtung für die die Erhöhung der Teilchengröße von kleinen Partikeln für einen Kondensatteilchenzähler bekannt. Bei dem Verfahren wird ein Aerosolstrom in einen Probenstrom und einen Mantelstrom getrennt. Der Mantelstrom wird filtriert und mit Dampf gesättigt und in einem Sättiger in eine Vortexströmung umgewandelt. Die Vortexströmung fließt in einen Kondensator, in dem der Probenstrom in das Zentrum des Vortex eingeleitet wird. In dem Kondensator kondensiert der Dampf in dem gesättigten Mantelstrom auf den Aerosolpartikeln aus, wodurch diese größer werden. Dieses bekannte Verfahren und diese bekannte Vorrichtung sind Analytik vorgesehen. Für eine industrielle Anwendung sind sie nicht geeignet.

DE 10 2004 038243 A1 zeigt einen Düsenimpaktor zur Staubtrennung.

Vorrichtungen zur Erzeugung von Luftvorhängen und Luftmessern oder Luftklingen (airknife; AirBlade von Dyson^{®}) sind bekannt und werden beispielsweise in Händetrocknern verwendet.

### Aufgabe der vorliegenden Erfindung

Der vorliegenden Erfindung lag die Aufgabe zu Grunde, Vorrichtungen und Verfahren bereitzustellen, die nicht nur auf die Abtrennung wässriger Aerosole aus der Luft oder auf die Wiedergewinnung wässriger Spritzlacke oder auf analytische Anwendungen beschränkt sind, sondern die sich auch effizient und effektiv bei Schwebstoffe allgemein in der Luft und in Gasen auf den unterschiedlichsten technischen Gebieten anwenden lassen.

### Erfindungsgemäße Lösung

Demgemäß wurde die Vorrichtung zur Abtrennung von Schwebstoffen aus Gasströme mit strömenden Gasen gemäß dem unabhängigen Anspruch 1 gefunden, die im Folgenden als "erfindungsgemäße Vorrichtung" bezeichnet wird. Vorteilhafte Ausführungsformen der erfindungsgemäßen Vorrichtung sind Gegenstand des abhängigen Anspruchs 2.

Außerdem wurde das Verfahren zur Abtrennung von Schwebstoffen aus Gasströme mit strömenden Gasen gemäß dem unabhängigen Anspruch 4 gefunden, das im Folgenden als "erfindungsgemäßes Verfahren" bezeichnet wird. Eine vorteilhafte Ausführungsform des erfindungsgemäßen Verfahrens ist Gegenstand der abhängigen Ansprüche 5 und 6.

Nicht zuletzt wurde die Verwendung der erfindungsgemäßen Vorrichtung und des erfindungsgemäßen Verfahrens auf den unterschiedlichsten technischen Gebieten gefunden, was im Folgenden als "erfindungsgemäße Verwendung" bezeichnet wird.

### Vorteile der Erfindung

Im Hinblick auf den Stand der Technik war es überraschend und für den Fachmann nicht vorhersehbar, dass die Aufgabe der vorliegenden Erfindung mithilfe der erfindungsgemäßen Vorrichtung, des erfindungsgemäßen Verfahrens und der erfindungsgemäßen Verwendung gelöst werden konnte.

Insbesondere überraschte, dass die erfindungsgemäße Vorrichtung, das erfindungsgemäße Verfahren und die erfindungsgemäße Verwendung nicht nur für die Abtrennung wässriger Aerosole aus der Luft, für die Wiedergewinnung wässriger Spritzlacke und für Anwendungen in der Analytik hervorragend geeignet waren, sondern sich mit Vorteil auf den unterschiedlichsten technischen Gebieten effizient, effektiv und kostengünstig für die Abtrennung von Schwebstoffen allgemein aus der Luft und aus Gasen einsetzen ließen.

Weitere Vorteile gehen aus der nachfolgenden Beschreibung hervor.

### Ausführliche Beschreibung der Erfindung

Im Allgemeinen haben Schwebstoffe Teilchengrößen von 500 pm bis 500 µm. Schwebstoffe mit Teilchengrößen >500 µm sedimentieren sehr rasch. Die Schwebstoffe können fest oder flüssig sein. Insbesondere können sie feinteilige Trübstoffe, Flüssigabfälle, Gärreste, tierische Abfälle, Gülle, Schlachtabfälle, Jauche, Exkremente Küchenabfälle, Bioabfälle, radioaktive und nicht radioaktive, organische, anorganische, organisch-anorganische und/oder biogene Partikel, Zigarettenrauch, Zigarrenrauch, Pfeifenrauch, Elektrozigarettenrauch, Faserwerkstoffe, Biogasanlagenabfälle, Oberflächenbeschichtungsmittel, Lackreste, Klärschlämme, Effluentien, Farben, Lacke, Lackreste, Overspray, Versiegelungsmaterialien, Polymerabfälle, Makromoleküle, Säureaerosole, flüchtige organische Verbindungen (VOC), schlecht Pilzsporen, Schimmelsporen, Pollen, Samen, Viren, Mikroorganismen, Insekteneier, Insekten, Teile von Insekten sowie Feinstäube, die beim Straßenverkehr, Schiffsverkehr und Luftverkehr, beim Schweißen, bei mechanischem Abrieb, bei Lecks in Anlagen, bei Sanierungsarbeiten, bei der Holzbearbeitung, bei der Steinbearbeitung, bei der Getreideernte, bei chemischen Reaktionen sowie bei Gebäudebränden, Waldbränden, Torfbränden, Bränden von Pipelines, Rohölförderanlagen, Erdgasförderanlagen, Bergwerken, Kohleflözen und Chemieanlagen, mechanischen und chemischen Zersetzungen, Explosionen, Vulkanausbrüchen, Reaktorunfällen und Sandstürmen entstehen, sein.

Sie können in der Luft und in Industriegasen, medizinischen Gasen, Prozessgasen, Schweißgasen und Abgasen aus Staubsaugern, Staubabscheidern, Klimaanlagen, Elektrofiltern, Verbrennungsmotoren, Kohlekraftwerken, Gaskraftwerken, Atomkraftwerken, Biokraftwerken, Beschichtungsanlagen, Lackieranlagen, chemischen Syntheseanlagen, Verbrennungsanlagen, Feuerungsanlagen, Brennöfen, Zementöfen, nuklearen Wiederaufbereitungsanlagen, Beschichtungsanlagen, Laboren, Gärsilos, Flugzeugen, Zügen und Schiffen vorliegen.

Die erfindungsgemäße Vorrichtung ist aus thermisch, mechanisch und chemisch stabilen sowie aus korrosionsstabilen Materialien aufgebaut. Beispiele für geeignete Materialien dieser Art sind Metalle wie eloxiertes Aluminium, Kupfer, Stahl, V2A-Stahl, V4A-Stahl, Hastalloy^{®}, Monel^{®}, Gläser wie Saphirglas, Keramiken wie Oxidkeramiken, SiN-Keramiken, SiC-Keramiken oder SiNC-Keramiken und thermisch stabile Kunststoffe wie Thermoplaste und Duroplaste, die mit Glasfasern, Stahlfasern, Basaltsfasern, Kohlefasern, textilen Fasern, Stahlmatten oder Glasmatten verstärkt sein können. Des Weiteren können die Kunststoffe noch Flammschutzmittel enthalten. Beispiele thermisch, mechanisch und chemisch besonders stabiler sowie formstabiler Thermoplaste sind Polyoxymethylen, Poly(tetrafluorethylen), Poly(chlortrifluorethylen), Polyvinylidenfuorid, Polyamide, Polyimide, Polyamidimide, Polysulfone, Polyethersulfone, Polyketone und Polyetherketone. Die Kunststoffe können auch mit einer Nanopartikel enthaltenden Kratzfest-Beschichtung beschichtet sein. Als Nanopartikel können insbesondere Siliziumdioxidnanopartikel, Wolframcarbidnanopartikel oder Bornitridnanopartikel verwendet werden.

Die erfindungsgemäße Vorrichtung umfasst mindestens eine, insbesondere eine, von einer Wand umschlossenen, in Fließrichtung der Gasströme gesehen sich verjüngende Sammelvorrichtung für die mit Schwebstoffen belasteten, zu reinigenden Gasströme auf.

Die Sammelvorrichtung ist trichterartig geformt. Dabei kann sie die Form eines Kegelstumpfs oder eines Pyramidenstumpfs haben. Vorzugsweise steht deren Mittelachse senkrecht auf der gedachten Grundfläche. Die gedachte Grundfläche des Pyramidenstumpfs kann dreieckig, viereckig, insbesondere quadratisch, fünfeckig oder sechseckig sein oder noch mehr Ecken und Kanten aufweisen. Die Ecken und Kanten können abgerundet sein. Vorzugsweise wird mindestens ein, insbesondere ein Kegelstumpf oder mindestens ein, insbesondere ein, insbesondere ein, Pyramidenstumpf mit quadratischer Grundfläche verwendet.

An die mindestens eine, insbesondere eine, Sammelvorrichtung schließt sich, in Fließrichtung der Gasströme gesehen, ein Bereich zur Herstellung mindestens eines verdichteten, mit Schwebstoffen belasteten Gasstroms an. Dieser Bereich schließt sich ohne Lücke direkt an das Ende der mindestens einen, insbesondere einen, Sammelvorrichtung an. Je nach der Form der mindestens einen, insbesondere einen, Sammelvorrichtung, kann der Querschnitt des Bereichs dreieckig, viereckig, insbesondere quadratisch, fünfeckig oder sechseckig sein oder noch mehr Ecken und Kanten aufweisen. Die Ecken und Kanten können abgerundet sein. Vorzugsweise ist der Querschnitt kreisrund oder quadratisch.

Am Ende dieses mindestens einen, insbesondere einen, Bereichs ist mindestens eine, insbesondere eine, Ausleitung für die mit Schwebstoffen unbelasteten oder nur gering belasteten, gereinigten Gasströme angeordnet. Die mindestens eine, insbesondere eine, Ausleitung hat vorzugsweise den gleichen Querschnitt wie der mindestens eine, insbesondere eine, Bereich.

In einer ersten Ausführungsform umfasst die erfindungsgemäße Vorrichtung am Ende des vorstehend beschriebenen Bereichs, d. h. in Fließrichtung des mindestens einen, insbesondere einen, verdichteten, mit Schwebstoffen belasteten Gasstroms gesehen, mindestens ein, insbesondere ein Paar von Hochdruckgasvorhängen, die senkrecht zur Fließrichtung unter einem Winkel α laminar gegeneinander strömen und unter einem Winkel β längs einer Auftrefflinie aufeinanderstoßen. Das mindestens eine, insbesondere eine Paar von Hochdruckgasvorhängen bildet so mindestens eine, insbesondere eine, Sperre und mindestens einen, insbesondere einen, Agglomerationsbereich für den mindestens einen, insbesondere einen, verdichteten, mit Schwebstoffen belasteten Gasstrom. In dem mindestens einen, insbesondere einen, Agglomerationsbereich werden die Schwebstoffe kondensiert, aggregiert und/oder agglomeriert.

Unmittelbar vor den unteren Kanten der aufeinanderstoßenden Hochdruckgasvorhänge verläuft mindestens eine, insbesondere eine, Ausleitung für die in dem mindestens einen, insbesondere einen, Agglomerationsbereich gebildeten, kondensierten, aggregierten und/oder agglomerierten Schwebstoffe.

Vorzugsweise haben die laminaren Hochdruckgasvorhänge der mindestens einen, insbesondere einen, Sperre die gleiche Geschwindigkeit, den gleichen Druck, die gleiche Länge und die gleiche Temperatur.

Vorzugsweise beträgt der Auftreffwinkel β der laminaren Hochdruckgasvorhänge 90° bis 170°, bevorzugt 80° bis 160° und insbesondere 70° bis 150°.

Vorzugsweise beträgt der Austrittswinkel α der laminaren Hochdruckgasvorhänge aus den bevorzugt schlitzförmigen Austrittsdüsen 30° bis 90°, bevorzugt 35° bis 90° und insbesondere 40° bis 90°.

Vorzugsweise wird das mindestens eine, insbesondere eine, Paar von jeweils zwei laminaren Hochdruckgasvorhängen von mindestens einem, insbesondere einem Paar einander gegenüberliegenden Vorrichtungen mit (i) jeweils einer bevorzugt schlitzförmigen Austrittsdüse, einem Strömungskanal für das laminar in Richtung der Austrittsdüse strömende Gas und (ii) einem Aufnahmeteil für eine Einsteckverbindung für die Verbindung eine Druckgasleitung mit der mindestens einen, insbesondere einen, Vorrichtung erzeugt. Letztere ist mit jeweils einem formschlüssigen Einsteckteil mit einem integrierten bündigen Auflageteil in die einander gegenüberliegenden Außenwände der Vorrichtung eingesteckt.

Vorzugsweise ist die vorstehend beschriebene mindestens eine, insbesondere eine, Ausleitung für die Kondensate, Aggregate und/oder Agglomerate der Schwebstoffe teilweise durch mindestens eine, insbesondere eine, Blende überdeckt. Die mindestens eine, insbesondere eine, Blende verläuft schräg nach oben in Richtung der jeweiligen Hochdruckgasvorhänge und parallel zu deren Grundlinie. Dadurch wird vermieden, dass Schwebstoffe, die noch nicht agglomeriert, kondensiert oder aggregiert sind, direkt in die mindestens eine, insbesondere eine, Ausleitung gelangen, sondern auf die Hochdruckgasvorhänge gelenkt werden.

In einer alternativen Ausführungsform, die in der vorliegenden Anmeldung nicht beansprucht wird, umfasst die Vorrichtung mindestens einen, insbesondere einen, senkrecht zur Fließrichtung des mindestens einen, insbesondere einen, verdichteten, mit Schwebstoffen belasteten Gasstroms mindestens einen, insbesondere einen stationären Vortex. Der mindestens eine, insbesondere eine, stationäre Vortex, rotiert jeweils um eine Drehachse oder Mittelachse und wird durch gekrümmte Wände eingeleitet, durch äußere Kräfte angefacht und/oder durch die Drehimpulserhaltung erzwungen. In dem mindestens einen Vortex, vorzugsweise im Bereich der jeweiligen Drehachse oder Mittelachse werden die Schwebstoffe kondensiert, agglomeriert und/oder aggregiert.

Die jeweilige Drehachse oder Mittelachse setzt sich in mindestens einer, insbesondere einer, trichterförmigen Ausleitung mit jeweils einem Trichterrohr fort. Die mindestens eine, insbesondere eine, trichterförmige Ausleitung dient dem Abtransport der in dem mindestens einen, insbesondere einen, stationären Vortex gebildeten Kondensate, Agglomerate und/oder Aggregate.

Vorzugsweise weist die Vorrichtung in dieser Ausführungsform mindestens einen, insbesondere einen, dosenförmigen Aufsatz mit einer Außenwand auf, die mindestens eine, insbesondere eine, Verwirbelungszone umschließt. Die Drehachse oder Mittelachse des mindestens einen, insbesondere einen stationären Vortex verläuft durch den Mittelpunkt der kreisförmigen Oberseite des mindestens einen, insbesondere einen, dosenförmigen Aufsatzes.

Der Durchmesser der jeweiligen kreisförmigen Oberseite kann kleiner, gleich oder größer als der horizontale Durchmesser des mindestens einen, insbesondere einen, Vortex sein. Im Falle eines größeren Durchmessers setzt sich die Rundung halbkreisförmig oder kreissegmentförmig gebogen in den jeweiligen einander gegenüberliegenden Außenwänden um den mindestens einen, insbesondere einen, Vortex fort, so das mindestens ein, insbesondere ein säulenartiger Bereich gebildet wird.

Des Weiteren können die jeweils einander gegenüberliegenden Außenwände im Bereich des mindestens einen, insbesondere einen, Vortex unterhalb des mindestens einen, insbesondere einen, dosenförmigen Aufsatzes, von oben nach unten gesehen, gegeneinander geneigt sein. In einer bevorzugten Ausführungsform weist der mindestens eine, insbesondere eine, dosenförmige Aufsatz jeweils mindestens eine, insbesondere eine, tangentiale Hochdruckgaseindüsung zur Erzeugung des mindestens einen, insbesondere einen, Vortex auf.

Bei einer weiteren bevorzugten Ausführungsform wird der mindestens eine, insbesondere eine, Vortex durch jeweils einen horizontal angeordneten Axialventilator, Diagonalventilator, Radialventilator, Zentrifugalventilator oder Querstromventilator, insbesondere durch ein Flügelrad mit gegeneinander geneigten Flügeln, oder durch jeweils eine vertikal angeordnete, rotierende Säule mit kreisrundem Querschnitt und mit Schaufelrädern auf ihrer vertikalen Oberfläche erzeugt.

Vorzugsweise setzt sich die jeweilige Drehachse, Drehlinie oder Mittellinie des mindestens einen, insbesondere einen, stationären Vortex an dessen unteren Ende in mindestens einer, insbesondere einer, mittig angeordneten, trichterförmigen Ausleitung mit jeweils einem Trichterrohr fort. Durch die mindestens eine, insbesondere eine, Ausleitung werden die Kondensate, Aggregate und/Agglomerate der Schwebstoffe abtransportiert.

In noch einer weiteren alternativen Ausführungsform der Vorrichtung, die in der vorliegenden Anmeldung nicht beansprucht wird, wird mindestens ein, insbesondere ein, verdichteter, mit Schwebstoffen belasteter Gasstrom direkt gegen mindestens einen, insbesondere einen, in entgegengesetzter Richtung strömenden Gasstrom gelenkt, sodass die mindestens zwei, insbesondere zwei, Gasströme in mindestens einem, insbesondere einem, Agglomerationsbereich aufeinanderstoßen, wodurch die Schwebstoffe agglomeriert, kondensiert und/oder aggregiert werden. Dabei weisen die mindestens zwei, insbesondere zwei, Gasströme dieselbe Geschwindigkeit und denselben Druck auf. Dabei kann die Temperatur der Gasströme gleich oder verschieden voneinander sein. Beispielsweise kann die Temperatur des mindestens einen, insbesondere einen, zweiten Gasstroms niedriger sein als die Temperatur des mindestens einen, insbesondere einen, belasteten Gasstroms. Dadurch kann die Kondensation, Aggregation und/oder Agglomeration der Schwebstoffe beschleunigt werden.

Vorzugsweise dienen Rohre der Lenkung der Gasströme.

Vorzugsweise entsteht der mindestens eine, insbesondere eine, Agglomerationsbereich im Wesentlichen vertikal oder vertikal zur Strömungsrichtung der mindestens zwei, insbesondere zwei, gegeneinander strömenden Gasströme.

Die mindestens zwei, insbesondere zwei, gegeneinander strömenden Gasströme können dieselben Gase oder Gasmischungen oder unterschiedliche Gase oder Gasmischungen umfassen. Vorzugsweise werden dieselben Gase oder Gasmischungen verwendet.

Der mindestens eine, insbesondere eine, zweite Gasstrom kann frei von Partikeln, insbesondere von Schwebstoffen, sein. Er kann aber auch Partikel und/oder Schwebstoffe enthalten, die als Kondensations-, Agglomerations- und/oder Aggregationskeime dienen. Deren Konzentration kann gleich oder verschieden von der Konzentration der Schwebstoffe in dem mindestens einen, insbesondere einen, belasteten Gasstrom sein.

In einer vorteilhaften Ausführungsform dieser Vorrichtung, handelt es sich bei den mindestens zwei, insbesondere zwei, Gasströmen um denselben mindestens einen, insbesondere einen, mit Schwebstoffen belasteten Gasstrom, der durch mindestens einen, insbesondere einen, Gasverteiler in mindestens zwei, insbesondere zwei, Gasströme aufgeteilt werden, die dann gegeneinander gelenkt werden.

In noch einer weiteren vorteilhaften Ausführungsform dieser Vorrichtung, die in der vorliegenden Anmeldung nicht beansprucht wird, können die Schwebstoffe in dem mindestens einen, insbesondere einen, mit Schwebstoffen belasteten Gasstroms und die in dem mindestens zweiten, insbesondere zweiten, Gasstrom vorhandenen Partikel und/oder Schwebstoffe entgegengesetzt elektrostatisch aufgeladen sein, wodurch die Kondensation, Agglomeration und/oder Aggregation beschleunigt wird. Zu diesem Zweck enthält die erfindungsgemäße Vorrichtung Vorrichtungen zur elektrostatischen Aufladung der Gasströme. Bei dieser Ausführungsform ist es von Vorteil, wenn die Innenwände der erfindungsgemäßen Vorrichtung elektrisch isolierend ausgerüstet sind.

Die in dem Agglomerationsbereich gebildeten Kondensate, Agglomerate und/oder Aggregate werden mithilfe einer Auffang- und Ausleitungsvorrichtung aus der erfindungsgemäßen Vorrichtung ausgeleitet. Vorzugsweise hat die Auffangvorrichtung eine lichte Weite, die etwas größer als die Breite des Agglomerationsbereichs ist. Bevorzugt umschließt sie den Agglomerationsbereich bis zu dessen halben Höhe und geht dann in die vorzugsweise rohrförmige, Ausleitungsvorrichtung über. Die Ausleitung kann durch mindestens eine, insbesondere eine, Absaugung unterstützt werden.

Bei noch einer weiteren alternativen Ausführungsform der Vorrichtung, die in der vorliegenden Anmeldung nicht beansprucht wird, lässt man mindestens einen, insbesondere einen, mit Schwebstoffen belasteten Gasstrom auf mindestens eine, insbesondere eine, im Wesentlichen senkrecht oder senkrecht zur Strömungsrichtung des mindestens einen, insbesondere einen, mit Schwebstoffen belasteten Gasstroms angeordnete Prallwand aufprallen, wobei man die resultierenden Kondensate, Aggregate und/oder Agglomerate mithilfe mindestens einer, insbesondere einer, unterhalb der mindestens einen, insbesondere einen, Wand angeordneten Auffang- und Ausleitungsvorrichtung ausleitet und in mindestens einer, insbesondere einer Auffangvorrichtung abfängt.

Vorzugsweise hat die mindestens eine, insbesondere eine, Auffang- und Ausleitungsvorrichtung die Form eines Schlitzes, der bis zur vollen oder insbesondere halben Höhe der mindestens einen, insbesondere einen, Prallwand reicht und der unterhalb der Prallwand in mindestens eine, insbesondere eine, vorzugsweise rohrförmige Ausleitungsvorrichtung übergeht.

Der mindestens eine, insbesondere eine, Schlitz kann indes auch um den vollen Umfang der mindestens einen, insbesondere einen, Prallwand geführt werden. In diesem Falle umschließt die mindestens eine, insbesondere eine, Auffangvorrichtung die mindestens eine, insbesondere eine, gesamte Prallwand und enthält Halterungen, die die Rückseite der mindestens einen, insbesondere einen, Prallwand mit der Innenwand der mindestens einen, insbesondere einen, Auffangvorrichtung wieder lösbar verbinden. Vorzugsweise handelt es sich bei den Halterungen um jeweils vier stiftartige Stege, die in die korrespondierenden Einsteckverbindungen an den Ecken der mindestens einen, insbesondere einen, Prallwand eingesteckt werden. Bevorzugt sind diese Stege mit der der Rückseite der mindestens einen, insbesondere einen, Prallwand gegenüberliegenden Innenwand der mindestens einen, insbesondere einen, Auffangvorrichtung fest verbunden. Die gesamte Anordnung kann im Bedarfsfall, beispielsweise zu Zwecken der Reinigung, von dem anderen Teil der mindestens einen, insbesondere einen Auffang- und Ausleitungsvorrichtung abgelöst werden.

Die mindestens eine, insbesondere eine Prallwand kann indes auch gewinkelt sein, wobei die Scheitellinie des mindestens einen, insbesondere einen, Winkels vorzugsweise mittig zu dem mindestens einen, insbesondere einen, aufprallenden, mit Schwebstoffen belasteten Gasstrom angeordnet ist und wobei der mindestens eine, insbesondere eine, Winkel sich zu dem mindestens einen, insbesondere einen, Gasstrom hin öffnet. Bevorzugt hat der mindestens eine, insbesondere eine, Winkel eine Weite von 45° bis 170° und insbesondere von 60° bis 120°. Die vorstehend beschriebenen Schlitze sind längst der Kanten der mindestens einen, insbesondere einen, Prallwand geführt.

Die mindestens eine, insbesondere eine, gewinkelte Prallwand kann eine längs des Scheitels verlaufende Ablaufrinne aufweisen, auf die beidseitig jeweils eine Zulaufrinne oder jeweils mindestens zwei Zulaufrinnen zuläuft oder zulaufen.,

Vor den Schlitzen der mindestens einen, insbesondere einen Auffang- und Ausleitungsvorrichtung sind vorzugsweise schräg nach oben zu der mindestens einen, insbesondere einen, Prallwand ragende Blenden angebracht, die den mindestens einen, insbesondere einen, mit Schwebstoffen belasteten Gasstrom auf die Oberfläche der mindestens einen, insbesondere einen, Prallwand lenken und die besagten Schlitze teilweise überdecken.

Vorzugsweise ist die mindestens eine, insbesondere eine, Prallwand und insbesondere ihre Aufpralloberfläche aus einem thermisch und mechanisch stabilen, kratzfesten Material wie Stahl, Edelstahl, Glas oder Keramik aufgebaut. Die Pralloberfläche kann hydrophob, superhydrophob, hydrophil oder superhydrophil ausgerüstet sein. Sie kann Nanostrukturen, Mikrostrukturen und/oder Makrostrukturen wie vertikale Abflussrinnen und/oder Zulaufrinnen aufweisen.

Die mindestens eine, insbesondere eine, Prallwand hat vorzugsweise eine niedrigere Temperatur, als der mindestens eine, insbesondere eine, mit Schwebstoffen belastete Gasstrom. Bevorzugt wird die Temperatur so gewählt, dass es zu keinen Ablagerungen - etwa eine Eisschicht - auf der Prallwand kommt.

Des Weiteren kann die mindestens eine, insbesondere eine, Prallwand elektrostatisch aufgeladen werden, wodurch die Schwebeteilchen in dem mindestens einen, insbesondere einen, Gasstrom entgegengesetzt aufgeladen werden, wodurch die Kondensation, Aggregation und/oder Agglomerationen im Agglomerationsbereich beschleunigt werden.

Bei den vorstehend beschriebenen alternativen Ausführungsformen können die resultierenden Kondensate, Aggregate und Agglomeraten in Auffangvorrichtungen wie Auffangbehälter, Filter Absorber oder Adsorber abgefangen werden.

Außerdem kann bei den vorstehend beschriebenen Ausführungsformen die erfindungsgemäße Vorrichtung mindestens eine, insbesondere eine, Einleitung umfassen, durch die mindestens ein, insbesondere ein, Hilfsgas in die mindestens eine, insbesondere eine, Sammelvorrichtung eingeleitet wird.

Vorzugsweise handelt es sich bei den strömenden Gasen der Hochdruckgasvorhänge und der Vortices, den Hilfsgasen, den mit Schwebstoffen belasteten Gasen und den gereinigten Gasen um Luft, Edelgase, Stickstoff, Sauerstoff, Wasserstoff, Ammoniak, Amine, Kohlendioxid, Schwefelhexafluorid und organische Gase, wie Methan, Ethan, Propan, Ethylen, Acetylen, Propylen, Tetrafluorethylen, Chlortrifluorethylen, Vinylchlorid, Phosgen, perhalogenierte oder teilhalogenierte Kohlenwasserstoffe, sowie Gemische aus mindestens zwei der genannten Gasen.

Die Gase können getrocknet, Wasser und/oder organischen Lösemitteln wie Methanol, Ethanol, Propanol, Aceton, Methylethlyketon, Ether, Ester, Waschbenzin, cyclische aliphatische und aromatische Kohlenwasserstoffe und deren Gemische enthalten oder hiermit gesättigt sein. Insbesondere können sie Wasser und/oder Wasserdampf enthalten.

Die Gasströme können laminar oder turbulent sein. Im Falle der Hochdruckgasvorhänge sind sie laminar.

Vorzugsweise liegen die Volumenströme der vorstehend genannten Gase bei 5 m³/h bis 100.000 m³/h, bevorzugt 5 m³/h bis 80.000 m³/h und insbesondere 5 m³/h bis 70.000 m³/h. Bevorzugt liegt ihr Druck bei 0,01 bar bis 100 bar, besonders bevorzugt 0,1 bar bis 80 bar und insbesondere 1,0 bis 70 bar.

Vorzugsweise liegt die Temperatur, bei der die erfindungsgemäße Anlage betrieben wird, insbesondere die Temperatur der Gase, bei -196 °C bis 500 °C, bevorzugt -120 °C bis 300 °C und insbesondere -70 °C bis 150 °C.

Die Vorrichtung umfasst des Weiteren eine Peripherie zur elektronischen hydraulischen, pneumatischen und mechanischen Steuerung und zur Regelung und Messung der physikalischen und chemischen Parameter bei der Durchführung des nachstehend beschriebenen erfindungsgemäßen Verfahrens. Die Peripherie umfasst elektronische Datenverarbeitungsanlagen, elektrische, mechanische, hydraulische und pneumatische Aktuatoren sowie Druck-, Temperatur- und Durchflussmessgeräte und Sensoren für chemische Verbindungen, insbesondere für Gase und Lösemittel, Partikelzähler und Messgeräte für Partikelgrößen.

Der erfindungsgemäßen Vorrichtung kann für die Abscheidung noch vorhandener geringer Mengen an Schwebstoffen und/oder an Kondensaten, Agglomeraten und/oder Aggregaten in den gereinigten Gasen
- mindestens ein Filter einer kleinsten filtrierbaren Teilchengröße von 50 nm bis 1000 nm, ausgewählt aus der Gruppe, bestehend aus Hochleistungs-Partikelfiltern EPA, Schwebstofffiltern HEPA, Hochleistungs-Schwebstofffiltern ULPA, Medium-Filtern, druckverlustfreien Röhrchenfiltern, Vorfiltern, Automobilinnenraumfiltern, Kuchenfiltern, Querstromfiltern, flexiblen Filtern, starren Filtern, Industriefiltern, Vliesen, Rückspülfiltern Wasserfiltern, Anschwemmfiltern, Raumfiltern, Schichtbettfiltern, Membranen, Magnetfiltern, Graphenfiltern, Venturi-Wäschern, Elektrostaten, optischen Abscheidern, Gasseparatoren, Gaswäschern, SCR-Katalysatoren und OCR-Katalysatoren, ausgewählt sind, wobei die Materialien aus der Gruppe, bestehend aus geäzten Metallen, gesinterten Metallen, Metallschäumen, Metallfäden, Metallwolle, Metallgewebe, monolithischen, durchlässigen Kunststoffen, Kunststoffgeweben, Kunststofffäden, Kunststoffwolle, Kunststoffgeweben, Kunststoffschäumen, Papieren, Pappen, Cellulosefäden, Cellulosegeweben, Cellulosewollen, Ligninfäden, Ligninwollen, Ligningeweben, Naturfasern, Naturwolle, Naturfasergeweben, Naturfasergewirken, Naturstoffschäumen, Schwämmen, Glasfasern, Glaswolle, Glasfritten, monolithischen, durchlässigen Keramiken, Keramikfritten, Keramikfasern, Keramikgeweben, Keramikwollen, Keramikschäumen, Borfasern und Steinfasern sowie Kompositmaterialien aus mindestens zwei der vorstehend genannten Materialien, und/oder
- mindestens eine Ultraschall-Akustophoresevorrichtung, umfassend mindestens ein stationäres Ultraschallfeld, wie sie beispielsweise in der internationalen Patentanmeldung WO 2017/153038 A2 beschrieben wird,
vorgeschaltet und/oder nachgeschaltet, insbesondere nachgeschaltet, werden.

Die erfindungsgemäße Vorrichtung dient vorzugsweise der Durchführung des erfindungsgemäßen Verfahrens.

Das erfindungsgemäße Verfahren umfasst zumindest die folgenden Verfahrensschritte:
(A) Bereitstellung von (a1) mindestens einer, insbesondere einer, von einer Wand umschlossenen, in Fließrichtung des mindestens einen, insbesondere einen, mit Schwebstoffen belasteten Gasstroms sich verjüngende Sammelvorrichtung für die mit Schwebstoffen belasteten Gasströme, (a2) mindestens einen, insbesondere einen, sich in Fließrichtung anschließenden Bereich zur Herstellung mindestens eines, insbesondere eines, verdichteten, mit Schwebstoffen belasteten Gasstroms sowie (a3) mindestens eine, insbesondere eine, Ausleitung für die mit Schwebstoffen unbelasteten oder nur gering belasteten, gereinigten Gase und
(B) Kondensieren, Aggregieren und/oder Agglomerieren der Schwebstoffe in mindestens einem, insbesondere einem, Agglomerationsbereich indem der mindestens eine, insbesondere eine, mit Schwebstoffen belastete Gasstrom gegen mindestens eine, insbesondere eine, Sperre aus mindestens einem, insbesondere einem, Paar unter einem Austrittswinkel α laminar gegeneinander strömende und unter einem Auftreffwinkel β längs mindestens einer, insbesondere einer, Auftrefflinie aufeinanderstoßende Hochdruckgasvorhänge gelenkt wird, wonach die im mindestens einen, insbesondere einen, Agglomerationsbereich gebildeten Kondensate, Aggregate und/oder Agglomerate der Schwebstoffe durch mindestens eine, insbesondere eine, Ausleitung, die unmittelbar vor den unteren Kanten der Hochdruckgasvorhänge angeordnet ist, ausgeleitet und in mindestens einem, insbesondere einem, Auffangbehälter aufgefangen werden,

Als Auffangvorrichtungen können insbesondere Auffangbehälter, Filter, Absorber und Adsorber verwendet werden.

Die Kondensate, Aggregate und/oder Aggregate werden vorzugsweise wiederverwendet oder gegebenenfalls zusammen mit den Filtern, Absorbern und Adsorbern umweltfreundlich entsorgt.

Die erfindungsgemäße Vorrichtung und das erfindungsgemäße Verfahren sind besonders vielseitig verwendbar. Beispiele für erfindungsgemäße Verwendungen sind Anwendungen im Umweltschutz, in der Medizin, in Privathaushalten, in gentechnologischen, biotechnologischen, chemischen, medizinischen und pharmakologischen Laboren, Technika und Industrieanlagen, in Energiegewinnungsanlagen, in Beschichtungsanlagen, in Lackieranlagen, im Handwerk, in der Nahrungsmittelindustrie, in der Automobilindustrie, im Schiffsbau, im Flugzeugbau, im Schienenverkehr, in der Baubranche, in Kläranlagen, in Wasseraufbereitungsanlagen, in Entsalzungsanlagen, im Ackerbau, in der Viehzucht, im Gartenbau und in der Forstwirtschaft. Diese Aufzählung veranschaulicht die Vielseitigkeit des erfindungsgemäßen Verfahrens und der erfindungsgemäßen Vorrichtung und ist nicht abschließend.

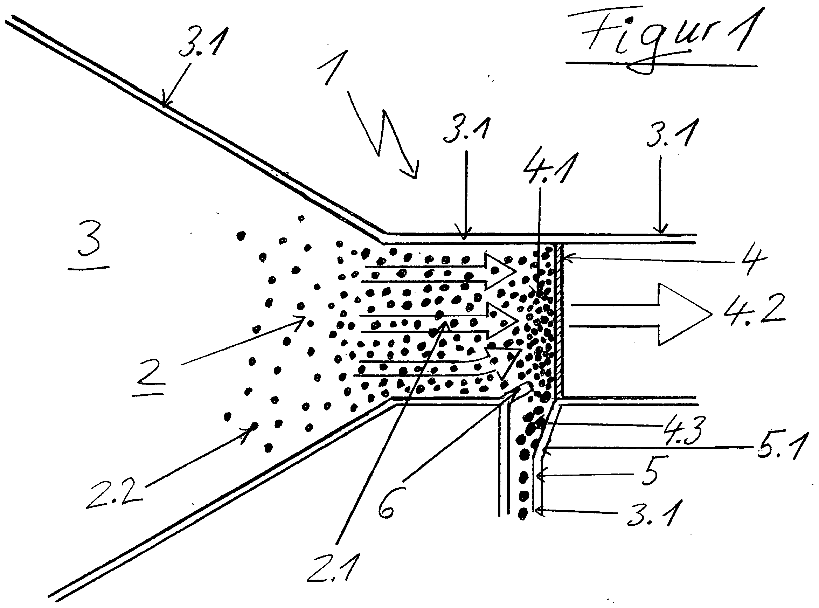

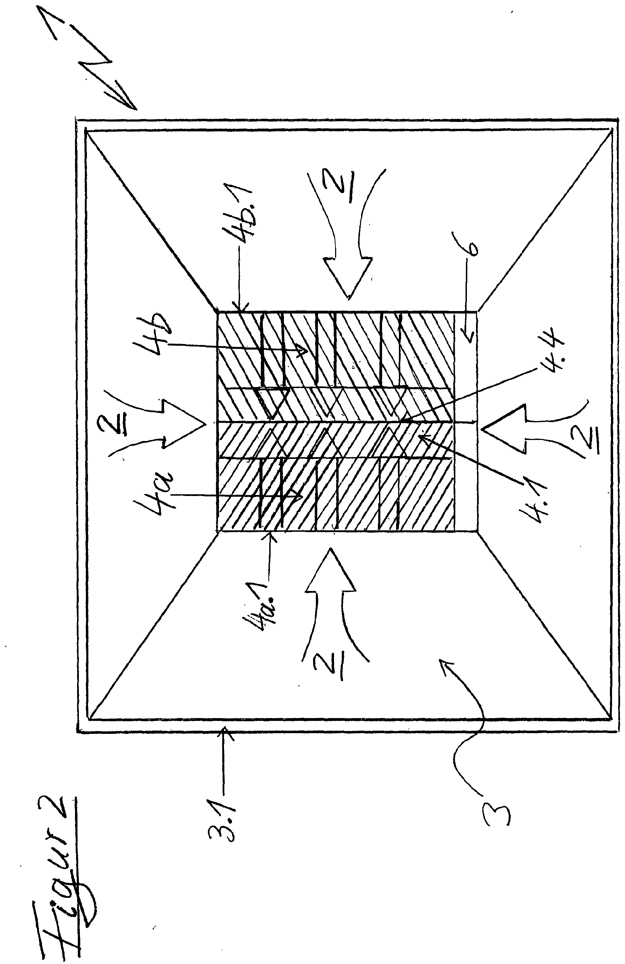

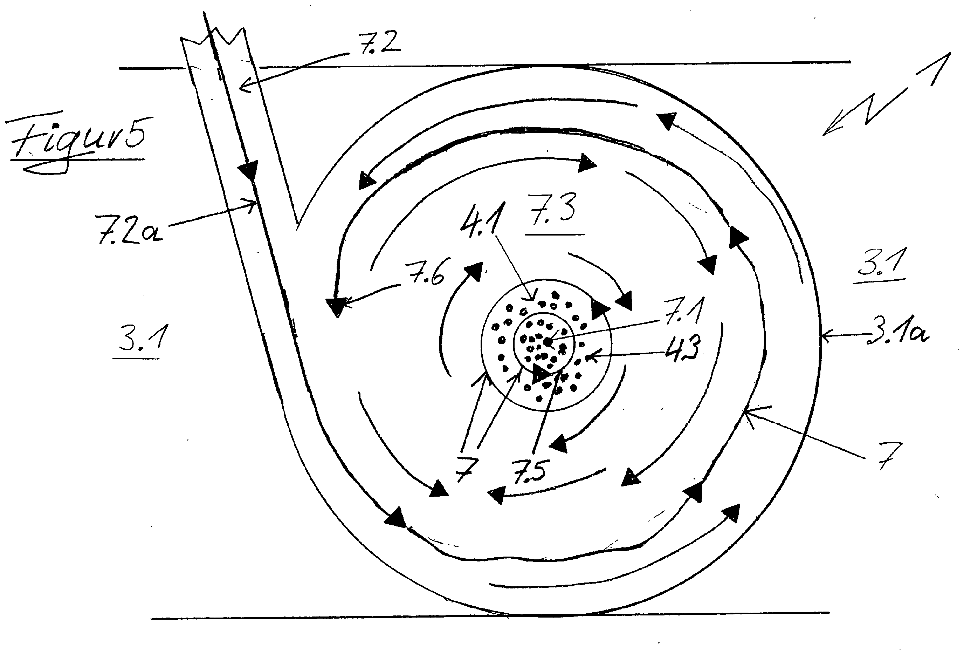

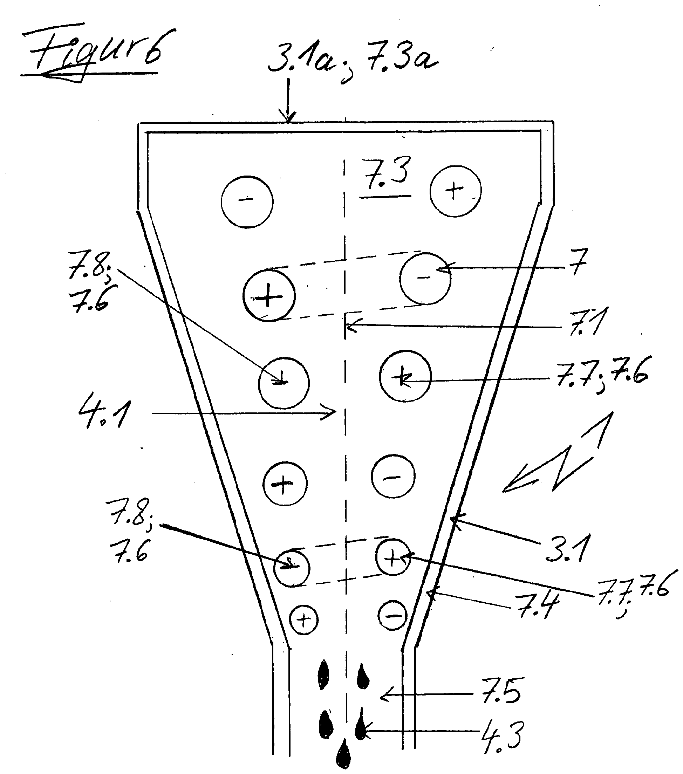

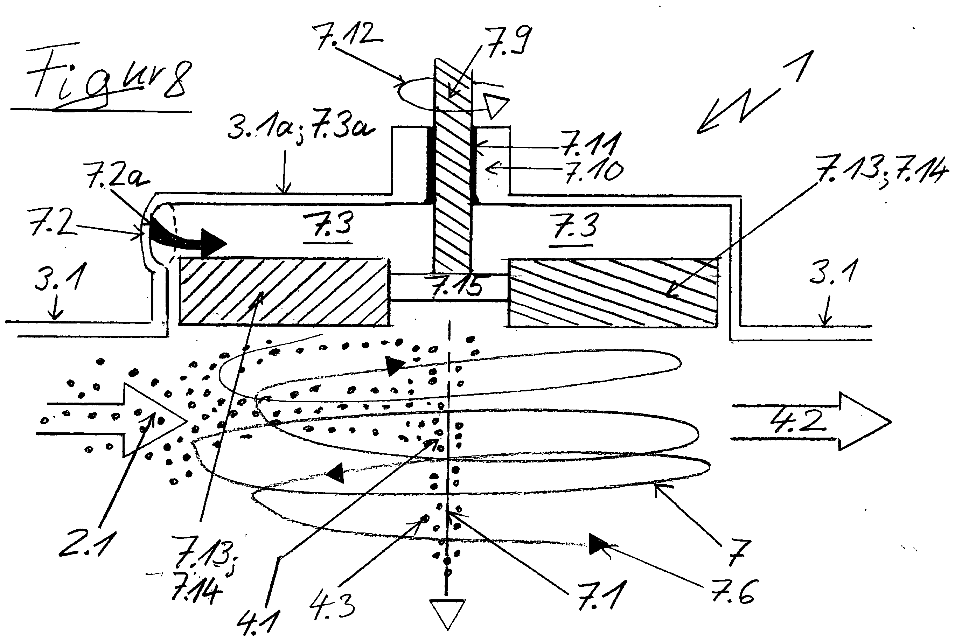

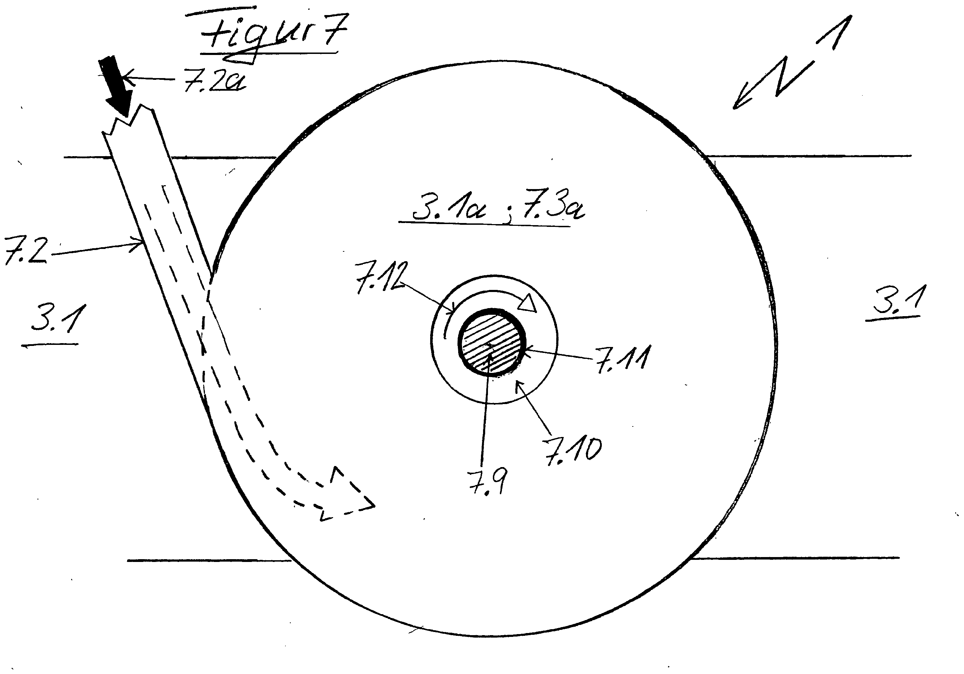

Die Figuren 1 bis 15 dienen der Veranschaulichung des Aufbaus der erfindungsgemäßen Vorrichtungen und ihrer Wirkungsweise. Sie sind deshalb auch nicht maßstäblich ausgeführt, sondern betonen ihre wesentlichen Merkmale. Sie sind auch nur als beispielhaft und nicht als einschränkend aufzufassen. Es zeigt
- Figur 1: die Draufsicht auf einen Längsschnitt durch eine erfindungsgemäße Vorrichtung 1 mit einer Sammelvorrichtung 3, einem Verdichtungsbereich 2.1, einem laminaren Hochdruckgasvorhang 4 und eine Ausleitung 5 und einem ausgeleiteten Gasstrom 4.2,
- Figur 2: die Draufsicht auf die erfindungsgemäße Vorrichtung 1 der Figur 1 von der Öffnung der Sammelvorrichtung 3 gesehen,
- Figur 3: die Draufsicht auf den Querschnitt durch die erfindungsgemäße Vorrichtung 1 mit den Vorrichtungen 4a.4 und 4b.4 zur Erzeugung laminarer Gasströmungen für die Hochdruckgasvorhänge 4a und 4b,
- Figur 3a: die Draufsicht auf eine perspektivische Darstellung der Vorrichtung 4a.4,
- Figur 4: die Draufsicht auf einen Längsschnitt durch die nicht beanspruchte Vorrichtung 1 mit einem stationären Vortex 7 als Sperre,
- Figur 5: die Draufsicht auf einen Längsschnitt durch den dosenförmigen Aufsatz 7.3a der nicht beanspruchten Vorrichtung 1 gemäß der Figur 4 mit der Verwirbelungszone 7.3 und der tangentialen Hochdruckgaseindüsung 7.2,
- Figur 6: die Draufsicht auf einen Querschnitt durch die nicht beanspruchte Vorrichtung 1 gemäß der Figur 4, worin die einander gegenüberliegenden Wände 3.1 nach unten gegeneinander geneigt sind und so den stationären Vortex 7 begrenzen,
- Figur 7: die Draufsicht auf die Oberseite des dosenförmigen Aufsatzes 7.3a mit der tangentialen Hochdruckgaseindüsung 7.2 und der zentriert in einem Lager 11 angeordneten Antriebswelle 7.9,
- Figur 8: die Draufsicht auf einen Längsschnitt durch einen Ausschnitt aus der nicht beanspruchten Vorrichtung 1 mit dem dosenförmigen Aufsatz 7.3a gemäß der Figur 7 mit der Antriebswelle 7.9 für das Flügelrad 7.13, das den stationären Vortex 7 in Gang setzt,
- Figur 9: die Draufsicht auf einen Querschnitt durch eine Spritzlackierkabine 8 und einer darunter angeordneten nicht beanspruchten Vorrichtung 1 zur Kondensation, Aggregation und/oder Agglomeration des Overspray 8.16,
- Figur 10: die Draufsicht auf einen Längsschnitt durch einen Ausschnitt aus der nicht beanspruchten Vorrichtung 1 mit zwei aus entgegengesetzten Richtungen im Agglomerationsbereich 4.1 direkt aufeinandertreffenden elektrostatisch entgegengesetzt aufgeladenen Gasströmen 2a und 2b,
- Figur 11: die Draufsicht auf einen Querschnitt durch den Ausschnitt gemäß der Figur 11 der nicht beanspruchten Vorrichtung 1 längs der Schnittlinie A-B,
- Figur 12: Fließschema einer nicht beanspruchten Vorrichtung 1 zur Erzeugung zweier entgegengesetzt elektrostatisch aufgeladener, in entgegengesetzter Richtung strömender Gasströme 2a und 2b, die im Agglomerationsbereich 4.3 direkt aufeinandertreffen,
- Figur 13: die Draufsicht auf einen Längsschnitt durch einen Ausschnitt aus der nicht beanspruchten Vorrichtung 1 mit einer Prallwand 15,
- Figur 14: die Draufsicht auf einen Querschnitt durch einen Ausschnitt aus der nicht beanspruchten Vorrichtung 1 gemäß der Figur 13 mit Blick auf die Prallwand 15 und
- Figur 15: Draufsicht auf einen Längsschnitt durch einen Ausschnitt aus der nicht beanspruchten Vorrichtung 1 mit einer Prallwand 15 und einer Auffang- und Ausleitungsvorrichtung 11 mit einer umlaufenden schlitzförmigen Öffnung zur Ableitung der Kondensate, Aggregate und/oder Agglomerate 4.3.

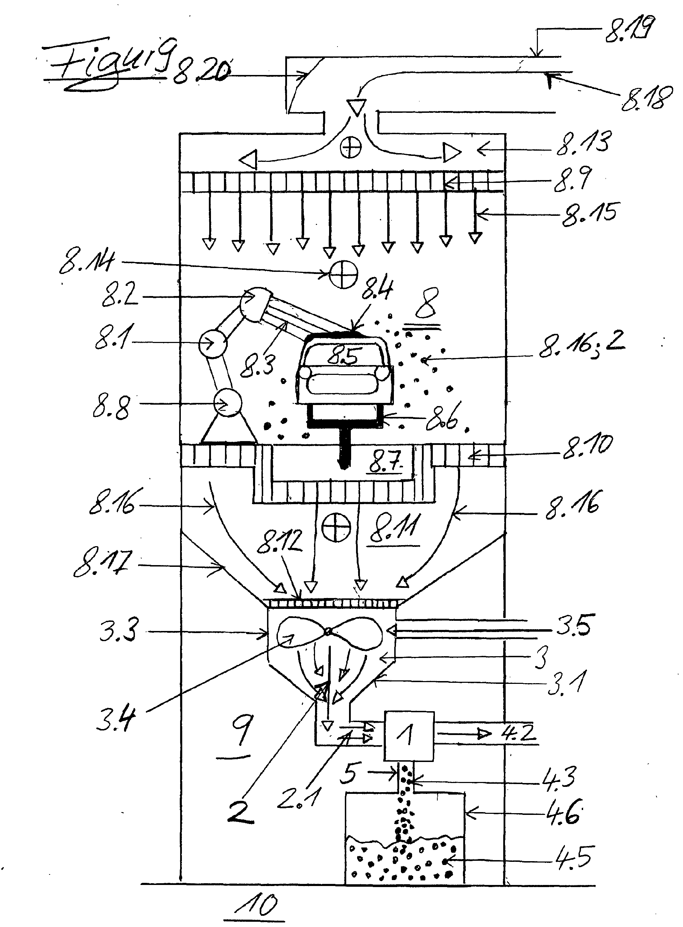

In den Figuren 1 bis 15 haben die Bezugszeichen die folgende Bedeutung:
- 1: Vorrichtung zur Abtrennung von Schwebstoffe 2.2 aus Gasströmen 2; 2.1 mit strömenden Gasen 4; 7
- 2: Mit Schwebstoffen 2.2 belasteter Gasstrom 2
- 2.1: Verdichteter, mit Schwebstoffe 2.2 belasteter Gasstrom 2
- 2.2: Schwebstoffe
- 2a: Mit elektrisch negativ geladenen Schwebstoffen 2a.2 belasteter Gasstrom
- 2a.1: Verdichteter, mit Schwebstoffen 2a.2 belasteter Gasstrom 2a
- 2a.2: Elektrisch negativ geladene Schwebstoffe
- 2b: Mit elektrisch positiv geladenen Schwebstoffen 2b.2 belasteter Gasstrom
- 2b.1: Verdichteter, mit Schwebstoffen 2b.2 belasteter Gasstrom 2b
- 2b.2: Elektrisch negativ geladene Schwebstoffe
- 3: Sammelvorrichtung
- 3.1: Außenwand der Vorrichtung 1
- 3.1a: Außenwand des dosenförmigen Aufsatzes 7.3a
- 3.2a; 3.2b: Aufnahmeöffnung in der Außenwand 3.1 für das Einsteckteil 4a.2; 4b.2
- 3.3: Ansaugzone
- 3.4: Ventilator
- 3.5: Mit Wasserdampf gesättigtes Hilfsgas
- 4: Laminarer Hochdruckgasvorhang
- 4a: Unter einem Winkel α aus einer Düse 4a.1 ausströmender, laminarer Hochdruckgasvorhang
- 4a.1: Austrittsdüse für den laminaren Hochdruckgasvorhang 4a
- 4a.2: Formschlüssiges Einsteckteil mit integriertem bündigen Auflageteil auf der Außenwand 3.1
- 4a.3: Strömungskanal für das laminar strömende Gas
- 4a.4: Vorrichtung zur Erzeugung einer laminaren Gasströmung für den Hochdruckgasvorhang 4a
- 4a.5: Aufnahmeteil für die Einsteckverbindung 4a.6
- 4a.6: Einsteckverbindung für die Verbindung einer Druckgasleitung mit der Vorrichtung 4a.4
- 4a.7: Strömungsrichtung in dem Strömungskanal 4a.3
- 4b: Unter einem Winkel α aus einer Düse 4b.1 aus Ströme der Hochdruckgasvorhang
- 4b.1: Austrittsdüse für den Hochdruckgasvorhang 4b
- 4b.2: Formschlüssiges Einsteckteil mit integriertem bündigen Auflageteil auf der Außenwand 3.1
- 4b.3: Strömungskanal für das laminar strömende Gas
- 4b.4: Vorrichtung zur Erzeugung einer laminaren Gasströmung für den Hochdruckgasvorhang 4a
- 4b.5: Aufnahmeteil für die Einsteckverbindung 4b sich rasch auch .6
- 4b.6: Einsteckverbindung für die Verbindung einer Druckgasleitung mit der Vorrichtung 4a.4
- 4b.7: Strömungsrichtung in dem Strömungskanal 4b.3
- 4.1: Agglomerationsbereich
- 4.2: Mit Schwebstoffe 2.2 unbelasteter oder nur gering belasteter, gereinigter Gasstrom
- 4.3: Kondensate, Aggregate und/oder Agglomerate
- 4.4: Auftrefflinie der Hochdruckgasvorhänge 4a, 4b
- 4.5: Sedimentierte Schwebstoffe
- 4.6: Auffangbehälter
- 5: Unmittelbar vor den unteren Kanten der Hochdruckgasvorhänge 4a; 4b verlaufende Ausleitung für die Agglomerate 4.3
- 5.1: Schräg nach unten und nach innen verlaufende Ablauffläche der Ausleitung 5
- 6: Schräg in Richtung der Hochdruckgasvorhänge 4a, 4b nach oben und parallel zur Grundlinie der Hochdruckgasvorhänge 4a; 4b verlaufende sowie die Öffnung der Ausleitung 5 teilweise überdeckende Blende
- 7: Vortex
- 7.1: Drehlinie, Mittellinie
- 7.2: Tangentiale Hochdruckgaseindüsung
- 7.2a: Hochdruckgasströmung
- 7.3: Verwirbelungszone
- 7.3a: Dosenförmiger Aufsatz
- 7.4: Trichterförmige Ausleitung für die Kondensate, Aggregate und/oder Agglomerate
- 7.5: Trichterrohr
- 7.6: Strömungsrichtung
- 7.7: Gasströmung "+" in Richtung des Betrachters
- 7.8: Gasströmung "-" vom Betrachter weg
- 7.9: Antriebswelle
- 7.10: Lager der Antriebswelle 7.9
- 7.11: Gleitdichtung für die Antriebswelle 7.9
- 7.12: Drehrichtung
- 7.13: Flügelrad
- 7.14: Schräggestellte Flügel
- 7.15: Verbindungsteil
- 8: Spritzlackierkabine
- 8.1: Lackierroboter
- 8.2: Sprühdüsen
- 8.3: Spritzlackkegel
- 8.4: Applizierter Spritzlack
- 8.5: Automobilkarosserie
- 8.6: Skid
- 8.7: Transportvorrichtung
- 8.8: Gelenk
- 8.9: Luftdurchlässige Filterdecke
- 8.10: Luft- und spritznebeldurchlässiger Siebboden
- 8.11: Spritznebel-Sammelraum
- 8.12: Luft- und spritznebeldurchlässiger Siebboden
- 8.13: Verteilerraum für die Zuluft 8.18
- 8.14: + im Kreis = Luft- und Materialzufuhr (Figur 9)
- 8.15: Luftströmung
- 8.16: Spritznebel, Overspray
- 8.17: Spritznebellenkung
- 8.18: Zuluft
- 8.19: Zuluftleitung
- 8.20: Umlenkbleche
- 9a: Negative elektrische Ladungen
- 9b: Positive elektrische Ladungen
- 10: Lösbare, gasdichte Stoß-an-Stoß-Verbindung
- 11: Auffang- und Ausleitungsvorrichtung für die Kondensate, Aggregate und/oder Agglomerate 4.3
- 11.1: Haltesteg
- 11.2: Einsteckverbindung
- 11a: Abgerundete Version der Auffang- und Ausleitungsvorrichtung für die Kondensate, Aggregate und/oder Agglomerate 4.3
- 12: Gasverteiler
- 13a: Förderpumpe für den Gasstrom 2a
- 13b: Förderpumpe für den Gasstrom 2b
- 14a: Spannungsquelle zur negativen elektrostatischen Aufladung des Gasstroms 2a
- 14b: Spannungsquelle zur positiven elektrostatischen Aufladung des Gasstroms 2b
- 15: Prallwand
- 15.1: Ablaufrinne oder Zulaufrinne
- 15.2: Umlaufende, lösbare Halterung

- A-B: Schnittlinie oder Stoßkante
- α: Austrittswinkel der Hochdruckgasvorhänge 4a; 4b
- β: Auftreffwinkel der Hochdruckgasvorhänge 4a; 4b

### Ausführliche Beschreibung der Figuren

### Figuren 1 bis 3a

### Die Kondensation, Aggregation und/oder Agglomeration von Schwebstoffen 2.2 mithilfe von Hochdruckgasvorhängen 4

Die erfindungsgemäße Vorrichtung 1 gemäß der Figur 1, insbesondere ihre Wände 3.1 und ihre Teile, die Aerosolkontakt hatten, waren aus V4A-Stahl aufgebaut. Die Temperatur des mit Aerosol 2.2 belasteten Luftstroms 2 aus einem Feuchtraum lag bei 30 °C. Der Druck lag bei 1,5 bar. Die erfindungsgemäße Vorrichtung 1 war für einen Luftdurchsatz von 1000 m³/h ausgelegt.

Der mit Aerosolen 2.2 belastete Luftstrom 2 wurde mithilfe eines Radialventilators (nicht dargestellt) in eine trichterförmige Sammelvorrichtung 3 mit rechteckiger Öffnung und von da aus in einen verengten Bereich mit rechteckigem Querschnitt geblasen, wodurch ein verdichteter, mit Aerosolen 2.2 belasteter Luftstrom 2 resultierte. Der verdichtete Luftstrom 2.1 wurde auf eine Sperre aus zwei unter einem Auftreffwinkel β von 120° aufeinandertreffende, gleich lange, laminare Hochdruckgasvorhänge 4a; 4b eines Drucks von 20 bar gelenkt. Die laminaren Hochdruckgasvorhänge 4a; 4b traten unter einem Austrittswinkel α von 80° aus den einander gegenüberliegenden schlitzförmigen Austrittsdüsen 4a.1; 4b1 der Vorrichtungen 4a.4; 4b.4 mit hoher Geschwindigkeit aus. Links und rechts der Auftrefflinie 4.4 bildete sich der Agglomerationsbereich 4.1, in dem das Aerosol 2.2 zu sedimentierbaren Agglomeraten, Kondensaten und/oder Aggregaten 4.3 verdichtet wurde. Diese wurden durch eine Ausleitung 5, die sich unmittelbar vor den unteren Kanten der Hochdruckgasvorhänge 4a; 4b befand, ausgeleitet. Die Wand 5.1 der Ausleitung 5, die sich unmittelbar an die besagten unteren Kanten anschloss, war nach innen zur Mittelachse der Ausleitung 5 geneigt, um die Ausleitung zu erleichtern. Die obere Öffnung der Ausleitung 5 war teilweise von einer Blende 6 überdeckt, die schräg nach oben in Richtung der Hochdruckgasvorhänge 4a; 4b und parallel zur deren Grundlinie verlief. Die Blende 6 beschleunigte den verdichteten, mit Aerosolen 2.2 belasteten Gasstrom 2 in Richtung der Hochdruckgasvorhänge 4a; 4b.

Die Hochdruckgasvorhänge 4a; 4b wiesen eine etwas tiefere Temperatur als der verdichtete Gasstrom 2.1 auf, was die Kondensation, Agglomeration und/oder Aggregation weiter förderte.

Die durch die Sperre hindurchtretende gereinigte Luft 4.2 war frei von Aerosolen 2.2 und konnte ohne weiteres in die Umgebung abgeleitet werden.

Die Teile der korrespondierenden Vorrichtungen 4a.4; 4b.4, worin sich die Strömungskanäle 4a.3; 4b.3 zur Erzeugung der in der Richtung 4a.7; 4b.7 strömenden laminaren Gasströme befanden, waren unter einem Winkel von (180° - α) = 110° gegen die einander gegenüberliegenden Wände 3.1 geneigt. Im Bereich ihrer Austrittsdüsen 4a.1; 4b.1 waren sie mit formschlüssigen Einsteckteilen 4a.2; 4b.2 mit integrierten bündigen Auflageteilen auf den Außenwänden 3.1 in den Aufnahmeöffnungen 3.2a; 3.2b befestigt.

An den anderen Enden der korrespondierenden Vorrichtungen 4a.4; 4b.4 waren Aufnahmeteile 4a.5; 4a6 für die Einsteckverbindungen 4a.6; 4b.6 angeordnet, die der Verbindung der Vorrichtungen 4a.4; 4b.4 mit Druckluftleitungen (nicht dargestellt) dienten.

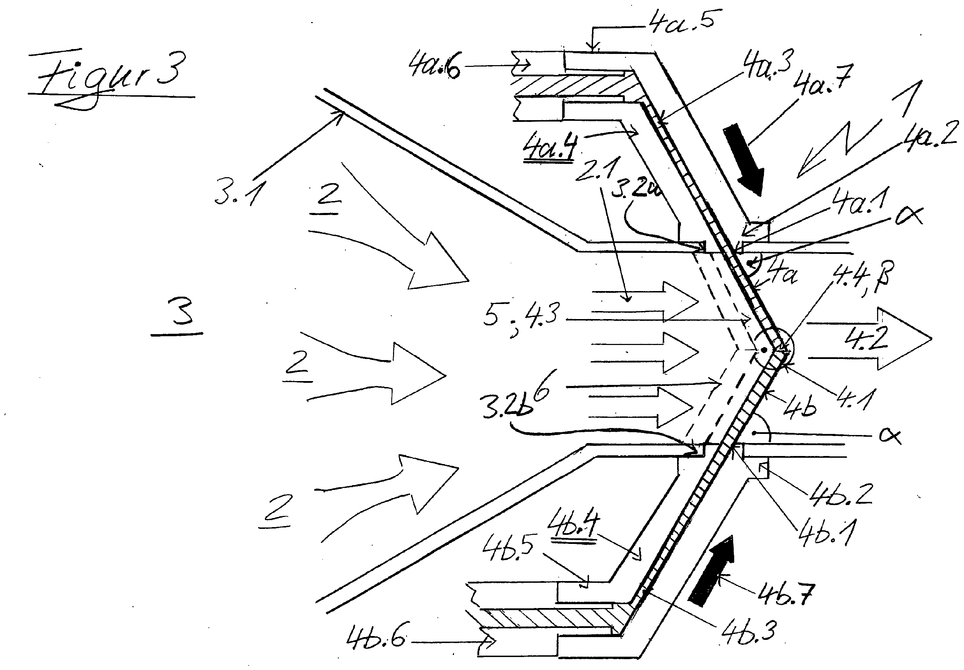

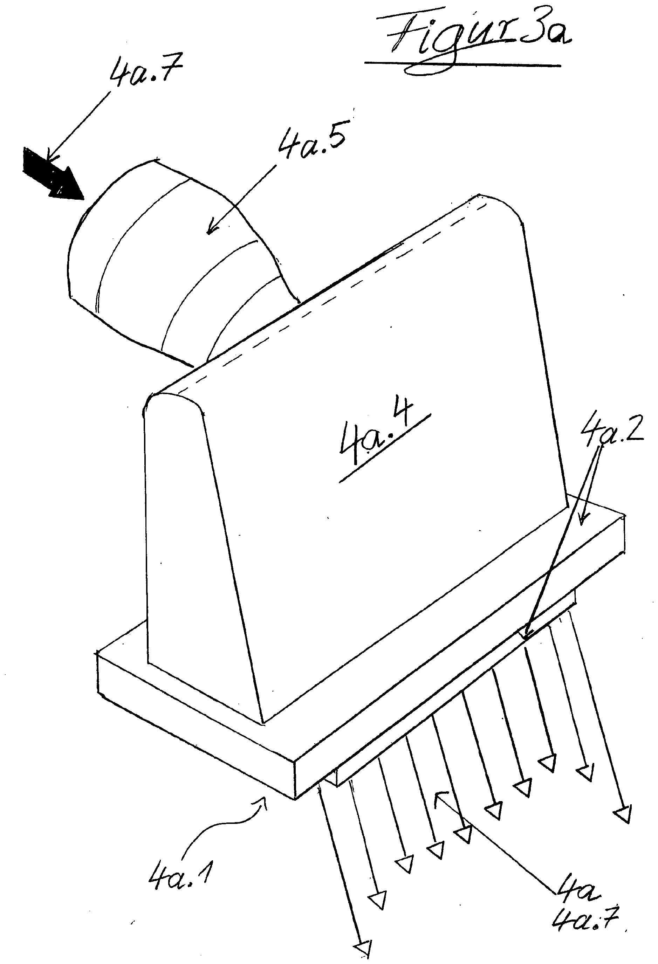

Die perspektivisch dargestellte Vorrichtung 4a.4 der Figur 3a war aus Polyoxomethylen durch 3-D-Druck hergestellt worden. Das Aufnahmeteil 4a.5 wies ein Innengewinde auf, sodass die Einsteckverbindung 4a.6 aus Stahl (nicht dargestellt) mit einem passenden Außengewinde eingeschraubt werden konnte. Die Einsteckverbindung 4a.6 wies noch ein Anschlussrohr auf, auf, an das der Druckluftschlauch mithilfe einer Schlauchschelle befestigt wurde.

Die erfindungsgemäße vorstehend beschriebene Vorrichtung 1 war hervorragend für die Durchführung des erfindungsgemäßen Verfahrens geeignet. Durch das erfindungsgemäße Verfahren konnten Aerosole effizient, effektiv, ökologisch unbedenklich und kostengünstig aus Luftströmen entfernt werden.

### Figuren 4 bis 6

### Die Kondensation, Aggregation und/oder Agglomeration von Schwebstoffen 2.2 mithilfe eines stationären Vortex 7

Der um eine Drehachse, Mittellinie oder Drehlinie 7.1 in der Strömungsrichtung 7.6 rotierende, stationäre Vortex 7 wurde in der Verwirbelungszone 7.3 des dosenförmigen Aufsatzes 7.3a; 3.1a durch eine durch eine tangentiale Hochdruckgaseindüsung 7.2 einströmende Hochdruckgasströmung 7.2a erzeugt und am Laufen gehalten. Der stationäre Vortex 7 wirkte als Sperre für den auf ihn auftreffenden, mit Aerosolen 2.2 belasteten, verdichteten Gasstrom 2.1. Durch die Sogwirkung des Unterdrucks und die tieferen Temperaturen im Inneren des stationären Vortex 7 wurden die Aerosole 2.2 zu der Drehachse hingezogen, wo sich der Agglomerationsbereich 4.1 bildete. Die Kondensate, Agglomerate und/oder Aggregate 4.3 wurden von dem stationären Vortex 7 in das Trichterrohr 7.5 transportiert und in einen Auffangbehälter 4.6 (hier nicht dargestellt) abgeleitet.

Im Querschnitt gesehen, waren die Wände 3.1 der erfindungsgemäßen Vorrichtung 1 im Bereich des stationären Vortex 7 vom dosenförmigen Aufsatzes 7.3a aus schräg nach innen aufeinander zu geneigt. Die Strömungsrichtung 7.6 im Vortex 7 wurde durch die Kreise 7.7; 7.8 symbolisiert. Dabei bedeutete "+" eine Luftströmung in Richtung des Betrachters und "-" eine Luftströmung vom Betrachter weg.

Der gereinigte Luftstrom 4.2 hinter dem stationären Vortex 7 wies keine Aerosole 2.2 mehr auf und konnte deshalb ohne Bedenken in die Umgebung abgelassen werden.

### Figuren 7 und 8

### Die Kondensation, Aggregation und/oder Agglomeration von Schwebstoffen 2.2 mithilfe eines stationären Vortex 7

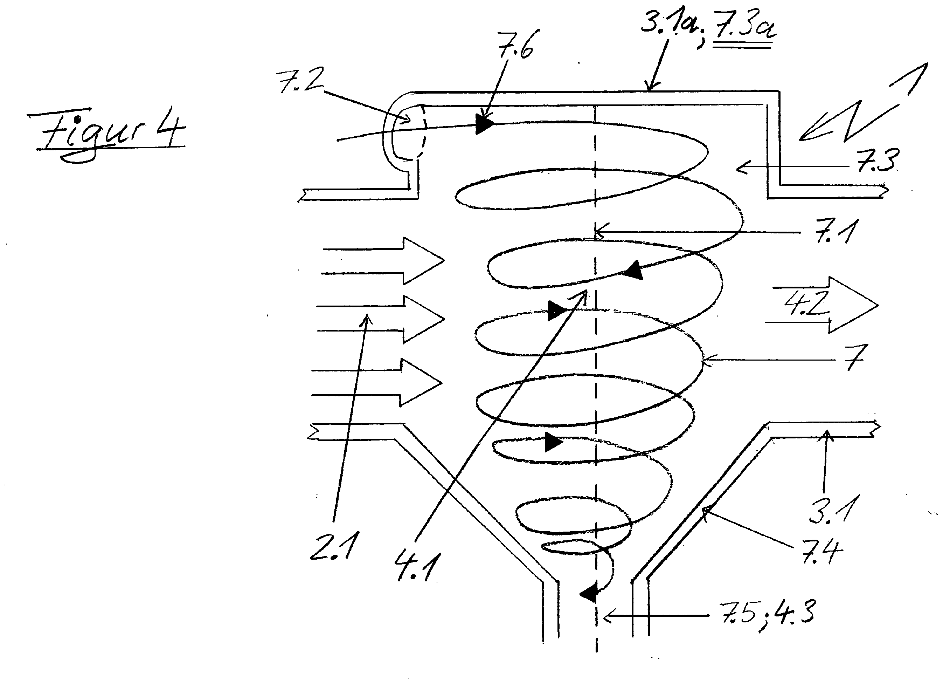

Der dosenförmige Aufsatz 7.3a mit der Wand 3.1a wies einen größeren Durchmesser auf als der Verdichtungsbereich für die mit Aerosolen 2.2 belasteten Luftströme 2 und der Bereich, durch den die gereinigte Luft 4.2 ausströmte. Der dosenförmige Aufsatz 7.3a wies eine tangentiale Hochdruckgaseindüsung 7.2 auf, durch die Druckluft 7.2a eingedüst wurde. Im Zentrum der Oberseite des dosenförmigen Aufsatzes 7.3a befand sich eine Antriebswelle 7.9 für das horizontale Flügelrad 7.13 mit sechs gegeneinander geneigten, schräg gestellten Flügeln 7.14, von denen jeweils zwei einander gegenüberliegende Flügel 7.14 durch Verbindungsteile 7.15 miteinander und mit der vertikalen Antriebswelle 7.9 verbunden waren. Die Antriebswelle 7.9 war in einem Lager 7.10, das eine Gleitdichtung 7.11 aufwies, gelagert. Die einströmenden Luft 7.2a wurde durch die tangentiale Beschleunigung und durch das sich in derselben Drehrichtung 7.12 drehende Flügelrad 7.13 in der Verwirbelungszone 7.3 verwirbelt, wodurch der stationäre Vortex 7 entstand. Die Aerosolteilchen 2.2 in dem verdichteten Luftstrom 2 wurden aufgrund des Unterdrucks im stationären Vortex 7 zur Drehachse 7.1 und zu dem Agglomerationsbereich 4.1 gezogen. Da sich im Inneren des Vortex 7 die Luft schneller drehte, sank dort die Temperatur, was die Kondensation, Agglomeration und/oder Aggregation der Aerosole 2.2 noch effektiver machte. Wie bei den Figuren 4 bis 6 beschrieben, wurden die resultierenden Kondensate, Aggregate und/oder Agglomerate 4.3 über die trichterförmige Ausleitung 7.4 mit dem Trichterrohr 7.5 ausgeleitet und in einem Auffangbehälter 4.6 (hier nicht dargestellt) gesammelt.

### Figur 9

### Die Abtrennung von Spritznebeln (Overspray) 8.16; 2 aus einer Spritzlackierkabine 8 mithilfe einer erfindungsgemäßen Vorrichtung 1

Eine Spritzlackierkabine 8 mit (i) Lackierrobotern 8.1 mit Gelenken 8.8, die über Sprühdüsen 8.2 Spritzlackkegel 8.3 auf Automobilkarosserien 8.5 applizierten, sodass Lackierungen 8.4 resultieren, mit (ii) Skids 8.6, die mit Hilfe einer Transportvorrichtung 8.7 die Automobilkarosserien 8.5 durch die Anlage 8 transportierten, mit (iii) Zuluft 8.14 aus laminaren Luftströmungen 8.15, die durch eine luftdurchlässige Filterdecke 8.9 aus einem Verteilerraum 8.13 einströmte, der von einer Zuluftleitung mit Umlenkbleche 8.19; 8.20 mit trockener Zuluft 8.18 versorgt wurde, und mit (iv) einem luft- und spritznebeldurchlässigen Siebboden wurde mit einer erfindungsgemäßen Vorrichtung 1 ausgerüstet.

Der Spritznebel 8.16; 2 trat durch den luft- und spritznebeldurchlässigen Siebboden 8.10 in den sich nach unten verjüngenden Spritznebel-Sammelraum 8.11 ein und wurde durch die Spritznebellenkung 8.17 aus Stahlblech zu einem weiteren luft- und spritznebeldurchlässigen Siebboden 8.12 geleitet. Die Spritznebel 8.16; 2 wurde durch einen Radialventilator 3.4 in der Ansaugzone 3.3 angesaugt und in die Sammelvorrichtung 3 geblasen und von da aus in den Bereich, in dem die mit Spritznebel 8.16 belasteten Luftströme 2 verdichtet wurden (verdichteter, mit Schwebstoffen 2.2 belastete Gasstrom 2; 2.1), geleitet. Zusätzlich wurde über eine Rohrleitung mit Wasserdampf gesättigte Luft als Hilfsgas 3.5 in die Sammelvorrichtung 3 geleitet. Die Befeuchtung des Spritznebels 8.16 beschleunigte die Kondensation, Aggregation und/oder Agglomeration des Spritznebels 8.16; 2 in der erfindungsgemäßen Vorrichtung 1 gemäß den Figuren 1 bis 3a. Die Kondensate, Aggregate und/oder Agglomerate 4.3 wurden über die Ausleitung 5 in den Auffangbehälter 4.6 geleitet, worin sie teilweise sedimentierten (4.5 sedimentierte Schwebstoffe). Die von den Spritznebeln 8.16; 2 befreiten Luftströme 4.2 wurden noch vorsorglich durch eine Ultraschall-Akustophoresevorrichtung, umfassend mindestens ein stationäres Ultraschallfeld, wie sie beispielsweise in der internationalen Patentanmeldung WO 2017/153038 A2 beschrieben wird, geleitet, um noch gegebenenfalls vorhandene Nanopartikel abzuscheiden. Danach konnten die Luftströme 4.2 ohne Bedenken in die Umgebung abgelassen werden. Der Inhalt des Auffangbehälters 4.6 konnte als Spritzlack recycelt oder zur Herstellung von anderen Beschichtungsstoffen und als Zusatzstoff für Beschichtungsstoffe verwendet werden.

Aus diesen Gründen war die erfindungsgemäße Entsorgung des Overspray 8.16 besonders effektiv, effizient, wirtschaftlich und umweltschonend.

### Figuren 10, 11 und 12

### Die Kondensation, Agglomeration und/oder Aggregation von Schwebstoffen 2.2 mithilfe zweier aus entgegengesetzter Richtung aufeinanderprallender Gasströme 2a; 2a.1 und 2b; 2b.1

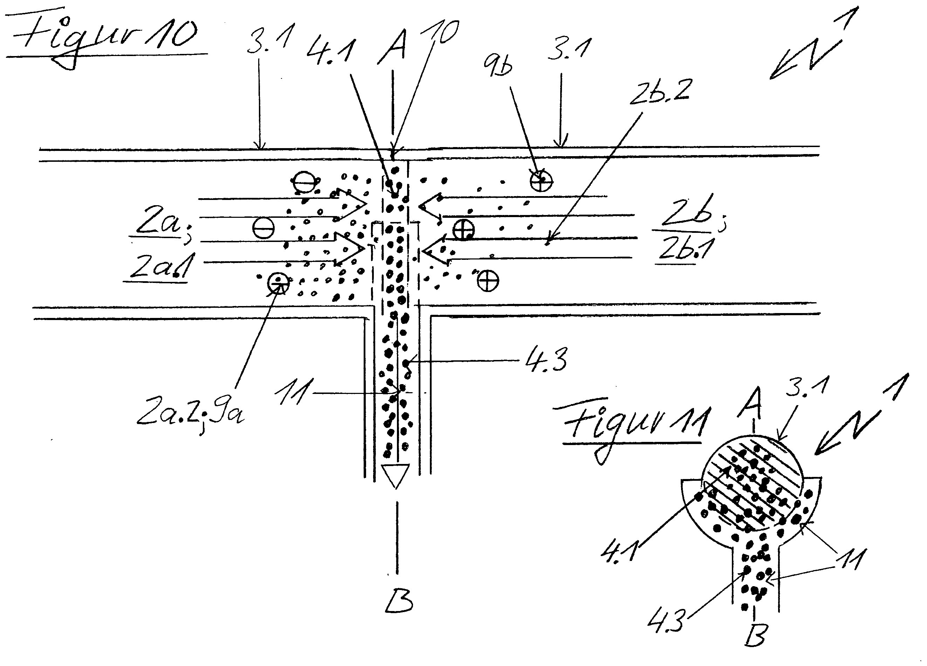

Die erfindungsgemäße Vorrichtung 1 umfasste zwei an den Stoßkanten A-B mithilfe einer lösbaren, gasdichten Stoß-an-Stoß-Verbindung 10 zusammengefügte Teile, die ein T-förmiges Rohr bildeten (vgl. Figur 10). Das vertikale Rohr bildete eine Auffang- und Ausleitungsvorrichtung 11 für die Kondensate, Agglomerate und/oder Aggregate 4.3, die den T- Balken bis zur Höhe des halben Durchmessers umfasste (vgl. Figur 11). In einer weiteren Ausführungsform wurde die Auffang- und Ausleitungsvorrichtung 11 fast bis zur vollen Höhe des Durchmessers des T-Balkens geführt (nicht wiedergegeben).

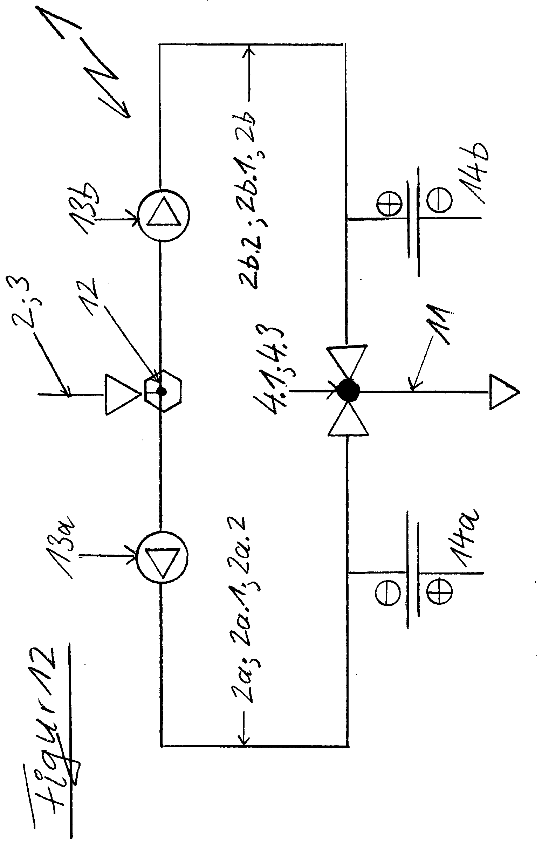

Die mit Schwebstoffen 2.2 belasteten Brandgase 2 aus einem Verbrennungsofen wurden über eine Sammelvorrichtung 3 einem Gasverteiler 12 zugeleitet. Der Gasverteiler 12 teilte die mit Schwebstoffen 2.2 belasteten Brandgase 2 in zwei in entgegengesetzter Richtung strömende Gasströme 2a; 2a.1; 2a.2 und 2b; 2b.1; 2a.2 desselben Drucks, derselben Strömungsgeschwindigkeit, derselbe Zusammensetzung und derselben Temperatur auf. Die beiden Gasströme wurden durch die Förderpumpen 13a und 13b gegeneinander gefördert und mithilfe der Vorrichtungen 14a und 14 b entgegengesetzt elektrostatisch aufgeladen (vgl. Figur 12).

Die beiden entgegengesetzt elektrostatisch aufgeladenen Gasströme 2a; 2a.1; 2a.2 (negative Ladungen 9a) und 2b; 2b.1; 2b.2 (positive Ladungen 9b) trafen in dem Agglomerationsbereich 4.1 frontal aufeinander, wodurch sich die Kondensate, Aggregate und/oder Agglomerate 4.3 bildeten, die zusammen mit den vereinigten Gasströmen 2a und 2b durch die Auffang- und Ausleitungsvorrichtung 11 (vgl. Figuren 10 und 11) ausgeleitet, in ein Zyklon (nicht wiedergegeben) geblasen, dort von den Gasströmen getrennt und in einem Auffangbehälter 4.6 (nicht wiedergegeben) sedimentiert wurden.

Diese Ausführungsform der erfindungsgemäßen Vorrichtung 1 war von der Konstruktion her gesehen einfach und robust und dennoch sehr variabel und wies dabei einen hervorragenden Trenneffekt auf.

### Figuren 13 und 14

### Die Kondensation, Agglomeration und/oder Aggregation von Schwebstoffen 2.2 mithilfe einer Prallwand 15

Ein mit Schwebstoffen 2.2 sehr stark belasteter Gasstrom 2 einer Temperatur von 300 °C wurde in einem Vierkantrohr mithilfe eines Verdichters (nicht wiedergegeben) zu einem verdichteten Gasstrom 2.1 verdichtet und direkt auf eine vertikale Prallwand 15 aus V4-A-Stahl einer Temperatur von 100 °C geblasen. Der Schlitz der Auffang- und Ausleitungsvorrichtung 11 war längs der unteren horizontalen Kante und den beiden vertikalen Kanten der vertikalen Prallwand 15 angeordnet und zum Teil durch eine Blende 6 verdeckt, die den Gasstrom 2.1 auf die Prallwand 15 fokussierte. Die Auftrefffläche der der Prallwand 15 wies eine vertikale mittig angeordnete Ablaufrinne 15.1 auf, auf die schräg nach unten Zulaufrinnen 15.1 zuliefen. Die Prallwand 15 war mithilfe einer umlaufenden, lösbaren Haltevorrichtung 15.2 mit der Wand 3.1 der erfindungsgemäßen Vorrichtung 1 verbunden.

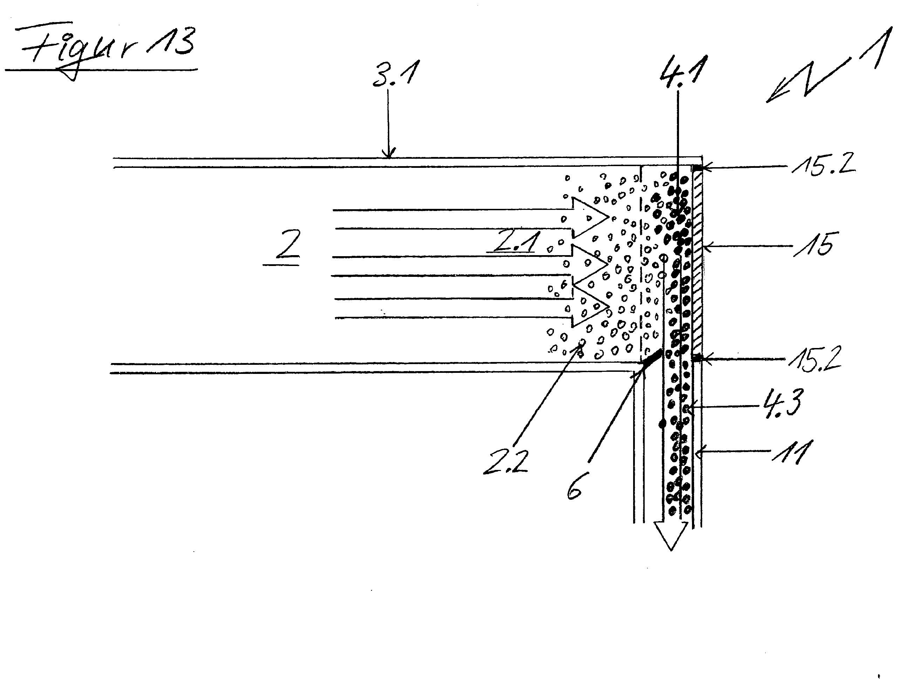

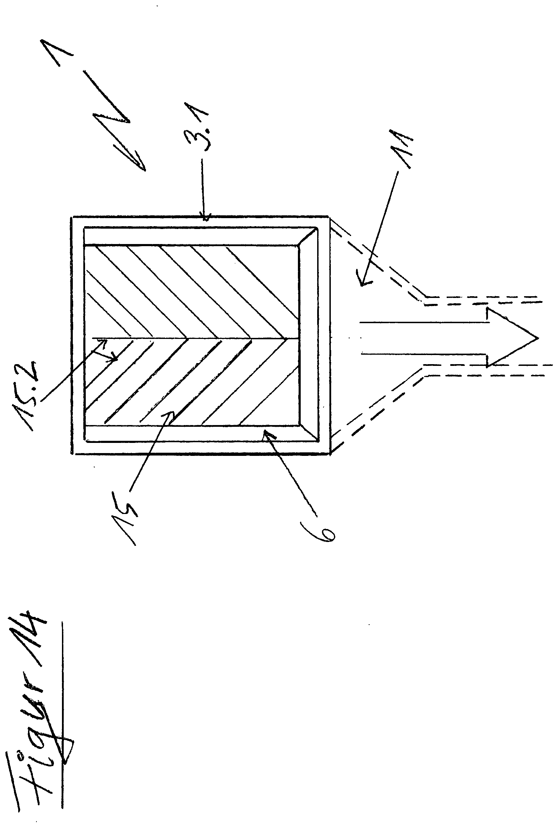

Vor der und auf der Aufprallfläche der Prallwand 15 bildete sich ein Agglomerationsbereich 4.1, in welchem die Schwebstoffe 2.2 kondensierten, aggregierten und/oder und agglomerierten und Kondensate, Aggregate und/oder Agglomerate bildeten, die mit dem von der Auffangvorrichtung 11 aufgefangen und mithilfe der Auffang- und Ausleitungsvorrichtung 11 (vgl. Figuren 13 und 14) aus der erfindungsgemäßen Vorrichtung 1 in ein Zyklon (hier nicht wiedergegeben) geblasen, dort von den Gasen getrennt wurden und in einem Auffangbehälter 4.6 (hier nicht wiedergegeben) sedimentiert wurden.

Auch diese Ausführungsform der erfindungsgemäßen Vorrichtung 1 war von der Konstruktion her gesehen einfach und robust und doch sehr variabel und wies nicht zuletzt einen hervorragenden Trenneffekt auf.

### Figur 15

### Die Kondensation, Agglomeration und/oder Aggregation von Schwebstoffen 2.2 mithilfe einer Prallwand 15

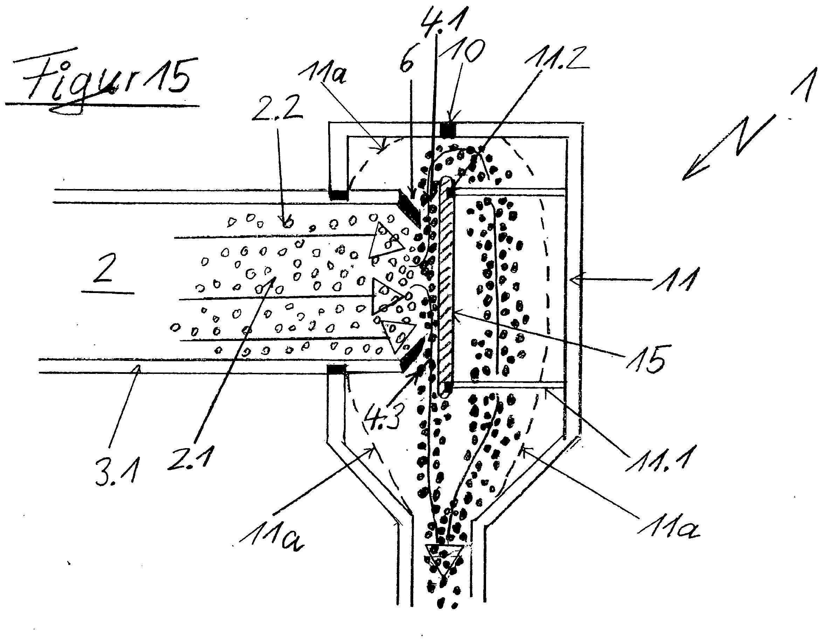

Wie bei der erfindungsgemäßen Vorrichtung 1 gemäß den Figuren 13 und 14 wurde auch bei der erfindungsgemäßen Vorrichtung 1 der Figur 15 das mit Schwebstoffen 2.2 belastete 300 °C heiße Abgas 2 zu einem verdichteten Gas 2.1 verdichtet und auf eine Prallwand 15 einer Temperatur von 100 °C geblasen. Im Unterschied zu der Vorrichtung 1 gemäß den Figuren 13 und 14 war der Schlitz der Auffang- und Ausleitungsvorrichtung 11 um den ganzen Umfang der Prallwand 15 geführt und teilweise von einer Blende 6, die den Gasstrom 2.2 auf die Prallwand 15 fokussierte, durchgehend teilweise überdeckt. Diese Anordnung machte es notwendig, dass die Auffang- und Ausleitungsvorrichtung 11 die Prallwand 15 und einen Teil des Rohrs mit der Wand 3.1 gasdicht umschloss, sodass die in dem Agglomerationsbereich 4.1 gebildeten Kondensate, Agglomerate und/oder Aggregate 4.3 nicht in die Umgebung gelangen konnten. Die Rückseite der vertikalen Prallwand 15 wurde mit vier stiftartigen Haltestegen, die in die vier in den vier Ecken der Prallwand 15 angeordneten Einsteckverbindungen 11.2 eingesteckt wurden, mit der gegenüberliegenden Innenwand der Auffangvorrichtung 11 verbunden.

Zu Zwecken der Wartung konnte die Auffang- und Ausleitungsvorrichtung durch Lösung der lösbaren, gasdichten Stoß-an-Stoß-Verbindungen 10 problemlos auseinandergenommen und wieder zusammengebaut werden.

In einer zweiten Ausführungsform waren die Wände der Auffang- und Ausleitungsvorrichtung 11a (vgl. die durchbrochenen Linien) abgerundet, sodass eine ballonartige Form resultierte. Dadurch konnten Ablagerungen von Kondensaten, Aggregaten und/oder Agglomeraten 4.3 in Ecken weitgehend vermieden werden.

Die in dem Agglomerationsbereich 4.1 gebildeten Kondensate, Aggregate und/oder Agglomerate 4.3 umströmten die Prallwand 15 und wurden über die Ausleitungsvorrichtung 11 in einen Zyklon geblasen, dort von den Gasen getrennt und in einem Auffangbehälter 4.6 (hier nicht wiedergegeben) sedimentiert.

Auch diese Ausführungsform der erfindungsgemäßen Vorrichtung 1 war von der Konstruktion her gesehen einfach und robust und doch sehr variabel und ausbaufähig und wies nicht zuletzt einen hervorragenden Trenneffekt auf.

## Patentansprüche

1. Vorrichtung (1) zur Abtrennung von Schwebstoffen (2.2) aus Gasströmen (2; 2.1) mit strömenden Gasen (4; 7), die Vorrichtung (1) umfassend
- mindestens eine von einer Wand (3.1) umschlossenen, in Fließrichtung der Gasströme (2) sich verjüngende Sammelvorrichtung (3) für die mit Schwebstoffen (2.2) belasteten Gasströme (2),
- mindestens einen sich in Fließrichtung anschließender Bereich zur Herstellung mindestens eines verdichteten, mit Schwebstoffen (2.2) belasteten Gasstroms (2.1) sowie
- mindestens einen Agglomerationsbereich (4.1) zur Bildung von Kondensaten, Aggregaten und/oder Agglomeraten (4.3) der Schwebstoffe (2.2),
**dadurch gekennzeichnet, dass** die Vorrichtung (1) des Weiteren umfasst:
- mindestens ein Paar senkrecht zur Fließrichtung des mindestens einen verdichteten, mit Schwebstoffen (2.2) belasteten Gasstroms (2.1) unter einem Winkel α laminar gegeneinander strömende, unter einem Winkel β längs einer Auftrefflinie (4.4) aufeinanderstoßende Hochdruckgasvorhänge (4a; 4b) als Sperre für den mindestens einen verdichteten, mit Schwebstoffen (2.2) belasteten Gasstrom (2.1) zur Bildung mindestens eines Agglomerationsbereichs (4.1) zur Kondensation, Aggregation und/oder Agglomeration der Schwebstoffe (2.2), wobei (i) die Vorrichtung (1) zur Erzeugung von mindestens einem Paar der laminaren Hochdruckgasvorhänge (4a, 4b) mindestens ein Paar einander gegenüberliegender Vorrichtungen (4a.4; 4b.4) mit jeweils einer Austrittsdüse (4a1; 4b1), einem Strömungskanal (4a3; 4b3) für das laminar in Richtung (4a7; 4b.7) strömende Gas und einer in ein Aufnahmeteil (4a5; 4b.5) aufgenommene Einsteckverbindung (4a.6; 4b.6) für die Verbindung einer Druckgasleitung mit der Vorrichtung (4a,4; 4b.4) aufweist, wobei (ii) letztere mit jeweils einem formschlüssigen Einsteckteil (4a.2; 4b.2) mit integriertem bündigem Auflageteil in die einander gegenüberliegenden Außenwände (3.1) der Vorrichtung (1) eingesteckt sind, wobei (iii) die aufeinanderstoßenden Hochdruckgasvorhänge (4a; 4b) die gleiche Geschwindigkeit, den gleichen Druck, die gleiche Länge und die gleiche Temperatur haben, wobei (iv) der Auftreffwinkel β der Hochdruckgasvorhänge (4a; 4b) 90 ° bis 170° beträgt und wobei die Austrittswinkel α der Hochdruckgasvorhänge (4a; 4b) 30° bis 80° betragen,
- mindestens eine unmittelbar vor den unteren Kanten der aufeinanderstoßenden Hochdruckgasvorhänge (4a; 4b) verlaufende Ausleitung (5) für die im Agglomerationsbereich (4.1) gebildeten kondensierten, aggregierten und/oder agglomerierten Schwebstoffe (4.3), wobei mindestens eine Blende (6), die schräg nach oben in Richtung der Hochdruckgasvorhänge (4a; 4b) und parallel zu der Grundlinie der Hochdruckgasvorhänge (4a; 4b) verläuft und die Öffnung der mindestens einen Ausleitung (5) teilweise überdeckt, vorhanden ist, sowie mindestens eine Ausleitung für die mit Schwebstoffen (2.2) unbelasteten oder nur gering belasteten, gereinigten Gasströme (4.2).

2. Vorrichtung (1) nach Anspruch 1, **dadurch gekennzeichnet, dass** der Vorrichtung (1) für die Abscheidung noch vorhandener geringer Mengen an Schwebstoffen (2.2) und/oder an Kondensaten, Agglomeraten und/oder Aggregaten (4.3) aus den Abgasen (4.2)
- mindestens ein Filter einer kleinsten filtrierbaren Teilchengröße von 50 nm bis 1000 nm, ausgewählt aus der Gruppe, bestehend aus Hochleistungs-Partikelfiltern EPA, Schwebstofffiltern HEPA, Hochleistungs-Schwebstofffiltern ULPA, Medium-Filtern, druckverlustfreien Röhrchenfiltern, Vorfiltern, Automobilinnenraumfiltern, Kuchenfiltern, Querstromfiltern, flexiblen Filtern, starren Filtern, Industriefiltern, Vliesen, Rückspülfiltern Wasserfiltern, Anschwemmfiltern, Raumfiltern, Schichtbettfiltern, Membranen, Magnetfiltern, Graphenfiltern, Venturi-Wäschern, Elektrostaten, optischen Abscheidern, Gasseparatoren, Gaswäschern, SCR-Katalysatoren und OCR-Katalysatoren, ausgewählt sind, wobei die Materialien aus der Gruppe, bestehend aus geäzten Metallen, gesinterten Metallen, Metallschäumen, Metallfäden, Metallwolle, Metallgewebe, monolithischen, durchlässigen Kunststoffen, Kunststoffgeweben, Kunststofffäden, Kunststoffwolle, Kunststoffgeweben, Kunststoffschäumen, Papieren, Pappen, Cellulosefäden, Cellulosegeweben, Cellulosewollen, Ligninfäden, Ligninwollen, Ligningeweben, Naturfasern, Naturwolle, Naturfasergeweben, Naturfasergewirken, Naturstoffschäumen, Schwämmen, Glasfasern, Glaswolle, Glasfritten, monolithischen, durchlässigen Keramiken, Keramikfritten, Keramikfasern, Keramikgeweben, Keramikwollen, Keramikschäumen, Borfasern und Steinfasern sowie Kompositmaterialien aus mindestens zwei der vorstehend genannten Materialien, und/oder
- mindestens eine Ultraschall-Akustophoresevorrichtung, umfassend mindestens ein stationäres Ultraschallfeld,
vorgeschaltet und/oder nachgeschaltet ist.

3. Verwendung der Vorrichtung (1) zur Abtrennung von Schwebstoffen (2.2) aus Gasströmen (2; 2.1) mit strömenden Gasen (4; 7) Anspruch 1 oder 2, **dadurch gekennzeichnet, dass** es sich bei den
(i) Schwebstoffen (2.2) um feinteilige Trübstoffe, Flüssigabfälle, Gärreste, tierische Abfälle, Gülle, Schlachtabfällen, Jauche, Exkrementen Küchenabfälle, Bioabfälle, radioaktive und nicht radioaktive, organische, anorganische, organisch-anorganische und/oder biogene Partikel, Zigarettenrauch, Zigarrenrauch, Elektrozigarettenrauch, Faserwerkstoffe, Biogasanlagenabfälle, Oberflächenbeschichtungsmittel, Lackreste, Klärschlämme, Effluentien, Farben, Lacke, Lackreste, Overspray, Versiegelungsmaterialien, Polymerabfälle, Makromoleküle, Säureaerosole, flüchtige organische Verbindungen (VOC), Pilzsporen, Schimmelsporen, Pollen, Samen, Viren, Mikroorganismen, Insekteneier, Insekten, Teile von Insekten sowie Feinstäube, die beim Straßenverkehr, Schiffsverkehr und Luftverkehr, beim Schweißen, bei mechanischem Abrieb, bei Lecks in Anlagen, bei Sanierungsarbeiten, bei der Holzbearbeitung, bei der Steinbearbeitung, bei der Getreideernte, bei chemischen Reaktionen sowie bei Gebäudebränden, Waldbränden, Torfbränden, Bränden von Pipelines, Rohölförderanlagen, Erdgasförderanlagen, Bergwerken, Kohleflözen und Chemieanlagen, mechanischen und chemischen Zersetzungen, Explosionen, Vulkanausbrüchen, Reaktorunfällen und Sandstürmen entstehen, und den
(ii) Gasströmen (2; 2.1) um Ströme von Luft, Industriegasen, medizinischen Gasen, Prozessgasen, Schweißgasen und Abgasen aus Staubsaugern, Staubabscheidern, Klimaanlagen, Elektrofiltern, Verbrennungsmotoren, Kohlekraftwerken, Gaskraftwerken, Atomkraftwerken, Biokraftwerken, Beschichtungsanlagen, Lackieranlagen, chemischen Syntheseanlagen, Verbrennungsanlagen, Feuerungsanlagen, Brennöfen, Zementöfen, nuklearen Wiederaufbereitungsanlagen, Beschichtungsanlagen, Laboren, Gärsilos, Flugzeugen, Zügen und Schiffen handelt.

4. Verfahren zur Abtrennung von Schwebstoffen (2.2) aus Gasströmen (2.; 2.1) mit strömenden Gasen (4; 7) mithilfe einer Vorrichtung (1) Anspruch 1 oder 2, umfassend die folgenden Verfahrensschritte:
(A) Bereitstellung von (a1) mindestens einer von einer Wand (3.1) umschlossenen, in Fließrichtung des mindestens einen Gasstroms (2) sich verjüngende Sammelvorrichtung (3) für die mit Schwebstoffen (2.2 belasteten Gasströme (2) und (a2) mindestens einen sich in Fließrichtung anschließenden Bereich zur Herstellung mindestens eines verdichteten, mit Schwebstoffen (2.2) belasteten Gasstroms (2.1) und
(B) Kondensieren, Aggregieren und/oder Agglomerieren der Schwebstoffe (2.2) in einem Agglomerationsbereich (4.1) indem der mindestens eine Gasstrom (2) gegen eine Sperre aus mindestens einem Paar unter einem Winkel α laminar gegeneinander strömende, unter einem Winkel β längs einer Auftrefflinie (4.4) aufeinanderstoßende Hochdruckgasvorhänge (4a; 4b) gelenkt wird, wonach die im mindestens einen Agglomerationsbereich (4.1) gebildeten Kondensate, Aggregate und/oder Agglomerate der Schwebstoffe (2.2) durch mindestens eine Ausleitung (5), die unmittelbar vor den unteren Kanten der Hochdruckgasvorhänge (4a; 4b) angeordnet ist, ausgeleitet und in mindestens einem Auffangbehälter (4.6) aufgefangen werden, und mindestens eine Ausleitung für die mit Schwebstoffen (2.2) unbelasteten oder nur gering belasteten, gereinigten Gase (4.2).

5. Verfahren nach Anspruch 4, **dadurch gekennzeichnet, dass** es mit Volumenströmen der strömenden Gase (4; 4a, 4b; 7), der Hilfsgase (3.5), der Gasströme (2) und der Gasströme (4.2) von 5 m³/h bis 100.000 m³/h, bei Gasdrücken von 0,01 bar bis 100 bar und/oder bei Temperaturen von -196 °C bis 500 °C betrieben wird.

6. Verfahren nach Anspruch 4 oder 5, **dadurch gekennzeichnet, dass** man mindestens ein Hilfsgas (3.5), welches die Dämpfe mindestens einer Flüssigkeit enthält oder damit gesättigt ist, in die Sammelvorrichtung (3) einleitet.

## Claims

1. Device (1) for separating suspended matter (2.2) from gas streams (2; 2.1) with streaming gases (4; 7), the device (1) comprising:
- at least one collection device (3) surrounded by a wall (3.1), tapering in the direction of flow of the gas streams (2) for gas streams (2) loaded with suspended matter (2.2),
- at least one zone adjoining in the direction of flow, for producing at least one compressed gas stream (2.1) loaded with suspended matter (2.2), as well as
- at least one agglomeration zone (4.1) for forming condensates, aggregates and/or agglomerates (4.2) of the suspended matter (2.2),
**characterized in that** the device (1) further comprises:
- at least one pair of high-pressure gas curtains (4a; 4b) flowing laminarly against each other at an angle α perpendicular to the direction of flow of the at least one compressed gas stream (2.1) loaded with suspended matter (2.2), colliding at an angle β along a line of incidence (4.4), as a barrier for the at least one compressed gas stream (2.1) loaded with suspended matter (2.2) to form at least one agglomeration zone (4.1) for condensation, aggregation and/or agglomeration of the suspended matter (2.2), wherein (i) the device (1) comprises, for the generation of at least one pair of the laminar high-pressure gas curtains (4a, 4b), at least one pair of opposite devices (4a.4; 4b.4) each with an outlet nozzle (4a1; 4b1), a flow channel (4a3; 4b3) for the gas flowing laminarly in the direction (4a7; 4b.7) and a plug-in connection (4a.6; 4b.6) accommodated in a receiving part (4a5; 4b.5) for connecting a compressed-gas line to the device (4a.4; 4b.4), wherein (ii) the latter are each plugged into the opposite outer walls (3.1) of the device (1) by means of a form-fitting plug-in part (4a.2; 4b.2) with integrated flush bearing part, wherein (iii) the colliding high-pressure gas curtains (4a; 4b) have the same velocity, the same pressure, the same length and the same temperature, wherein (iv) the angle of incidence β of the high-pressure gas curtains (4a; 4b) ranges from 90° to 170° and wherein the exit angles α of the high-pressure gas curtains (4a; 4b) range from 30° to 80°,
- at least one discharge line (5) extending directly in front of the lower edges of the colliding high-pressure gas curtains (4a; 4b) for the condensed, aggregated and/or agglomerated suspended matter (4.3) formed in the agglomeration zone (4.1), wherein at least one diaphragm (6), which extends obliquely upwards towards the high-pressure gas curtains (4a; 4b) and parallel to the base line of the high-pressure gas curtains (4a; 4b) and partially covers the opening of the at least one discharge line (5), is present, as well as
- at least one discharge line for the purified gas streams (4.2) loaded with little suspended matter or not loaded with suspended matter (2.2).

2. Device (1) according to claim 1, **characterized in that,** for separating small quantities of suspended matter (2.2) and/or condensates, agglomerates and/or aggregates (4.3) from the exhaust gases (4.2)
- at least one filter with a smallest filterable particle size of 50 nm to 1000 nm, selected from the group consisting of EPA high-efficiency particle filters, HEPA suspended matter filters, ULPA high-efficiency suspended matter filters, agent filters, small-tube filters without pressure loss, prefilters, automobile cabin filters, cake filters, cross-flow filters, flexible filters, rigid filters, industrial filters, nonwovens, backwash filters, water filters, precoat filters, space filters, stratified bed filters, membranes, magnetic filters, graphene filters, Venturi scrubbers, electrostatic devices, optical separators, gas separators, gas scrubbers, SCR catalysts and OCR catalysts, wherein the materials are selected from the group consisting of etched metals, sintered metals, metal foams, metal filaments, metal wool, metal fabric, monolithic, permeable plastics, plastic fabrics, plastic wires, plastic wool, plastic fabrics, plastic foams, paper, cardboard, cellulose filaments, cellulose fabrics, cellulose wools, lignin filaments, lignin wools, lignin fabrics, natural fibers, natural wool, natural fiber fabrics, natural fiber knits, natural material foams, sponges, glass fibers, glass wool, glass frits, monolithic, permeable ceramics, ceramic frits, ceramic fibers, ceramic fabrics, ceramic wools, ceramic foams, boron fibers and rock fibers, as well as composite materials composed of at least two of the aforementioned materials, and/or
- at least one ultrasonic acoustophoresis device, comprising at least one stationary ultrasonic field,
is connected upstream and/or downstream of the device (1).

3. Use of the device (1) for separating suspended matter (2.2) from gas streams (2; 2.1) with streaming gases (4; 7) according to claim 1 or 2, **characterized in that**
(i) the suspended matter (2.2) are fine-particle turbidities, liquid waste, fermentation residues, animal waste, slurry, offal, manure, excrement, kitchen waste, organic waste, radioactive and non-radioactive, organic, inorganic, inorganic-organic and/or biogenic particles, cigarette smoke, cigar smoke, electronic cigarette smoke, fiber-based materials, biogas plant waste, surface coating agents, lacquer residues, sludge, effluents, paints, lacquers, lacquer residues, overspray, sealants, polymer waste, macromolecules, acid-based aerosols, volatile organic compounds (VOCs), fungal spores, mold spores, pollen, seeds, viruses, microorganisms, insect eggs, insects, insect parts and fine dusts, which result from road, ship and air traffic, welding, mechanical wear, leaks in installations, renovation work, woodworking, stone working, harvesting, chemical reactions as well as building fires, forest fires, peat fires, pipeline fires, crude oil conveying facilities, natural gas conveying facilities, mining, coal deposits and chemical facilities, mechanical and chemical decomposition, explosions, volcanic eruptions, reactor failures and sandstorms, and
(ii) the gas streams (2; 2.1) are streams of air, industrial gases, medical gases, process gases, welding gases and exhaust gases from dust extractors, dust separators, air-conditioning units, electric filters, internal combustion engines, coal-fired power stations, gas-fired power stations, nuclear power stations, bioelectric power stations, coating plants, painting plants, chemical synthesis plants, incineration plants, combustion plants, combustion furnaces, cement kilns, nuclear recycling plants, coating plants, laboratories, fermentation silos, planes, trains and ships.

4. Method for separating suspended matter (2.2) from gas streams (2; 2.1) with streaming gases (4; 7) using a device (1) according to claim 1 or 2, comprising the following method steps:
(A) provision (a1) of at least one collection device (3) surrounded by a wall (3.1), tapering in the direction of flow of the at least one gas stream (2), for gas streams (2) loaded with suspended matter (2.2), and (a2) of at least one zone adjoining the direction of flow for producing at least one compressed gas stream (2.1) loaded with suspended matter (2.2), and
(B) condensation, aggregation and/or agglomeration of suspended matter (2.2) in an agglomeration zone (4.1) in that the at least one gas stream (2) is directed against a barrier composed of at least one pair of high-pressure gas curtains (4a; 4b) flowing against each other in a laminar manner at an angle α, colliding at an angle β along a line of incidence (4.4), whereupon the condensates, aggregates and/or agglomerates of the suspended matter (2.2) formed in the at least one agglomeration zone (4.1) are discharged via at least one discharge line (5), which is arranged directly in front of the lower edges of the high-pressure gas curtains (4a; 4b), and are collected in at least one collection container (4.6), and at least one discharge line for purified gases (4.2) loaded with little suspended matter or not loaded with suspended matter (2.2).

5. Method according to claim 4, **characterized in that** it is operated at volume flow rates of the streaming gases (4; 4a, 4b; 7), the auxiliary gases (3.5), the gas streams (2) and the gas streams (4.2) of 5 m³/h to 100.000 m³/h, at gas pressures of 0.01 bar to 100 bar and/or at temperatures of -196 °C to 500 °C.

6. Method according to claim 4 or 5, **characterized in that** at least one auxiliary gas (3.5), which contains or is saturated with the vapors of at least one liquid, is introduced into the collection device (3).

## Revendications

1. Dispositif (1) de séparation de matières en suspension (2.2) de flux de gaz (2 ; 2.1) avec des écoulements de gaz (4 ; 7), le dispositif (1) comprenant :
- au moins un dispositif de collecte (3) entouré par une paroi (3.1), se rétrécissant dans la direction d'écoulement des flux de gaz (2) pour les flux de gaz (2) chargés en matières en suspension (2.2),
- au moins une zone se raccordant dans la direction d'écoulement, destinée à produire au moins un flux de gaz (2.1) comprimé, chargé en matières en suspension (2.2), ainsi
- qu'au moins une zone d'agglomération (4.1) destinée à former des condensats, des agrégats et/ou des agglomérats (4.2) des matières en suspension (2.2),
**caractérisé en ce que** le dispositif (1) comprend par ailleurs :
- au moins une paire de rideaux de gaz haute pression (4a ; 4b) s'écoulant l'un à l'encontre de l'autre de manière laminaire selon un angle α de manière perpendiculaire par rapport à la direction d'écoulement de l'au moins un flux de gaz (2.1) comprimé chargé en matières en suspension (2.2), s'entrechoquant selon un angle β le long d'une ligne d'incidence (4.4) en tant que barrière pour l'au moins un flux de gaz (2.1) comprimé chargé en matières en suspension (2.2) pour former au moins une zone d'agglomération (4.1) pour la condensation, l'agrégation et/ou l'agglomération des matières en suspension (2.2), dans lequel (i) le dispositif (1) présente, pour générer au moins une paire des rideaux de gaz haute pression (4a, 4b) laminaires, au moins une paire de dispositifs (4a.4 ; 4b.4) se faisant face avec respectivement une buse de sortie (4a1 ; 4b1), un canal d'écoulement (4a3 ; 4b3) pour le gaz à écoulement laminaire dans la direction (4a7 ; 4b.7) et une liaison d'enfichage (4a.6 ; 4b.6) logée dans une partie de réception (4a5 ; 4b.5) pour la liaison d'une conduite de gaz comprimé au dispositif (4a.4 ; 4b.4), dans lequel (ii) ces derniers sont enfichés par respectivement une pièce d'enfichage (4a.2 ; 4b.2) à complémentarité de forme avec une partie d'appui en affleurement intégrée dans les parois extérieures (3.1) se faisant face les unes les autres du dispositif (1), dans lequel (iii) les rideaux de gaz haute pression (4a ; 4b) s'entrechoquant ont la même vitesse, la même pression, la même longueur et la même température, dans lequel (iv) l'angle d'incidence β des rideaux de gaz haute pression (4a ; 4b) va de 90° à 170° et dans lequel les angles de sortie α des rideaux de gaz haute pression (4a ; 4b) vont de 30° à 80°,
- au moins une conduite d'évaluation (5) s'étendant directement devant les arêtes inférieures des rideaux de gaz haute pression (4a ; 4b) s'entrechoquant pour les matières en suspension (4.3) condensées, agrégées et/ou agglomérées formées dans la zone d'agglomération (4.1), dans lequel au moins un diaphragme (6), qui s'étend de manière oblique vers le haut en direction des rideaux de gaz haute pression (4a ; 4b) et de manière parallèle à la ligne de base des rideaux de gaz haute pression (4a ; 4b) et recouvre en partie l'orifice de l'au moins une conduite d'évacuation (5), est présent, ainsi
- qu'au moins une conduite d'évacuation pour les flux de gaz (4.2) épurés non chargés ou seulement faiblement chargés en matières en suspension (2.2).

2. Dispositif (1) selon la revendication 1, **caractérisé en ce que** sont montés en amont et/ou en aval du dispositif (1) pour la séparation de faibles quantités présentes de matières en suspension (2.2) et/ou de condensats, d'agglomérats et/ou d'agrégats (4.3) issus des gaz d'échappement (4.2)
- au moins un filtre d'une taille de particules les plus petites filtrables de 50 nm à 1000 nm, choisi parmi le groupe constitué de filtres de particules à haute efficacité EPA, de filtres de matières en suspension HEPA, de filtres de matières en suspension à haute efficacité ULPA, de filtres d'agent, de filtres à petits tubes sans perte de pression, de préfiltres, de filtres d'habitacle de voiture, de filtres de cuisine, de filtres de flux transversal, de filtres flexibles, de filtres rigides, de filtres industriels, de non-tissés, de filtres à rétrolavage, de filtres à eau, de filtres à précouche, de filtres spatiaux, de filtres à lit, de membranes, de filtres magnétiques, de filtres en graphène, d'épurateurs à Venturi, d'appareils électrostatiques, de séparateurs optiques, de séparateurs de gaz, d'épurateurs de gaz, de catalyseurs SCR et de catalyseurs OCR, dans lequel les matériaux sont choisis parmi le groupe constitué de métaux mordancés, de métaux frittés, de mousses métalliques, de fils métalliques, de laine métallique, de tissu métallique, de matières synthétiques monolithiques, perméables, de tissus en matière synthétique, de fils en matière synthétique, de laine en matière synthétique, de tissus en matière synthétique, de mousses en matière synthétique, de papiers, de cartons, de fils de cellulose, de tissus de cellulose, de laines de cellulose, de fils de lignine, de laines de lignine, de tissus de lignine, de fibres naturelles, de laine naturelle, de tissus en fibre naturelle, de tricots en fibre naturelle, de mousses en matière naturelle, d'éponges, de fibres de verre, de laine de verre, de frittes de verre, de céramiques monolithiques, perméables, de frittes de céramique, de fibres en céramique, de tissus en céramique, de laines en céramique, de mousses en céramique, de fibres de bore et de fibres de roche ainsi que de matériaux composites composés d'au moins deux matériaux mentionnés ci-avant, et/ou
- au moins un dispositif à acoustophorèse ultrasonore, comprenant au moins un champ ultrasonore stationnaire.

3. Utilisation du dispositif (1) pour la séparation de matières en suspension (2.2) de flux de gaz (2 ; 2.1) avec des écoulements de gaz (4; 7) selon la revendication 1 ou 2, **caractérisé en ce que**
(i) les matières en suspension (2.2) sont des turbidités à fines particules, des déchets liquides, des résidus de fermentation, des déchets d'origine animale, du lisier, des abats, du fumier, des excréments, des déchets de cuisine, des déchets organiques, des particules radioactives et non radioactives, organiques, inorganiques, inorganiques-organiques et/ou biogènes, de la fumée de cigarette, de la fumée de cigare, de la fumée de cigarette électronique, des matériaux à base de fibres, des déchets d'installation de biogaz, des produits de revêtement de surfaces, des résidus de peinture, de la boue, des effluents, des couleurs, de la peinture, des résidus de peinture, de l'overspray, des matériaux de scellement, des déchets de polymère, des macromolécules, des aérosols à base d'acide, des composés organiques volatils (VOC), des spores fongiques, des spores de moisissure, du pollen, des semences, des virus, des microorganismes, des oeufs d'insecte, des insectes, des parties d'insectes ainsi que des poussières fines, qui se forment en présence du trafic routier, du trafic naval et du trafic aérien, lors du soudage, lors de l'usure mécanique, lors de fuites dans des installations, lors de travaux de rénovation, lors de l'usinage du bois, lors du travail de la pierre, lors des récoltes, lors de réactions chimiques ainsi que lors d'incendies de bâtiment, de feux de forêt, d'incendies de tourbe, d'incendies d'oléoducs, d'installations de convoyage de pétrole brut, d'installations de convoyage de gaz naturel, de travail à la mine, de gisements de charbon et d'installations chimiques, de décompositions mécaniques et chimiques, d'explosions, d'éruptions volcaniques, de pannes de réacteur et de tempêtes de sable, et
(ii) les flux de gaz (2 ; 2.1) sont des flux d'air, de gaz industriels, de gaz médicaux, de gaz de processus, de gaz de soudage et de gaz d'échappement provenant d'aspirateurs de poussières, de séparateurs de poussières, de climatisations, de filtres électriques, de moteurs à combustion interne, de centrales au charbon, de centrales à gaz, de centrales nucléaires, de centrales bioélectriques, d'installations de revêtement, d'installations de mise en peinture, d'installations de synthèse chimiques, d'installations d'incinération, d'installations de combustion, de fours à combustion, de fours de cimenterie, d'installations de recyclage nucléaire, d'installations de revêtement, de laboratoires, de silos de fermentation, d'aéronefs, de trains et de navires.

4. Procédé de séparation de matières en suspension (2.2) de flux de gaz (2 ; 2.1) avec des écoulements de gaz (4 ; 7) à l'aide d'un dispositif (1) selon la revendication 1 ou 2, comprenant les étapes de procédé suivantes:
(A) la fourniture (a1) d'au moins un dispositif de collecte (3) entouré par une paroi (3.1), se rétrécissant dans la direction d'écoulement de l'au moins un flux de gaz (2) pour les flux de gaz (2) chargés en matières en suspension (2.2) et (a2) d'au moins la zone se raccordant la direction d'écoulement destinée à produire au moins un flux de gaz (2.1) comprimé, chargé de matières en suspension (2.2), et
(B) la condensation, l'agrégation et/ou l'agglomération des matières en suspension (2.2) dans une zone d'agglomération (4.1) en ce que l'au moins un flux de gaz (2) est dirigé contre une barrière composée d'au moins une paire de rideaux de gaz haute pression (4a ; 4b) circulant l'un à l'encontre de l'autre de manière laminaire selon un angle α, s'entrechoquant selon un angle β le long d'une ligne d'incidence (4.4), ce après quoi les condensats, les agrégats et/ou les agglomérats des matières en suspension (2.2) formés dans l'au moins une zone d'agglomération (4.1) sont évacués par au moins une conduite d'évacuation (5), qui est disposée directement devant les arêtes inférieures des rideaux de gaz haute pression (4a ; 4b) et sont récupérés dans au moins un contenant de récupération (4.6), et au moins une conduite d'évacuation pour les gaz (4.2) épurés non chargés ou seulement faiblement chargés en matières en suspension (2.2).

5. Procédé selon la revendication 4, **caractérisé en ce qu'**il fonctionne avec des débits volumiques des écoulements de gaz (4 ; 4a, 4b ; 7), des gaz auxiliaires (3.5), des flux de gaz (2) et des flux de gaz (4.2) de 5 m³/h à 100.000 m³/h, à des pressions de gaz de 0,01 bar à 100 bar et/ou à des températures de -196 °C à 500 °C.

6. Procédé selon la revendication 4 ou 5, **caractérisé en ce qu'**on introduit dans le dispositif de collecte (3) au moins un gaz auxiliaire (3.5), lequel contient les vapeurs d'au moins un liquide ou en est saturé.
